# EUROPÄISCHE PATENTANMELDUNG

(11) **EP 4 201 855 A1**
(43) Veröffentlichungstag der Anmeldung: **28.06.2023**
(21) Anmeldenummer: 22209963.2
(22) Anmeldetag: 28.11.2022
(51) Int. Cl.: B65G 57/06, B26D 7/32, B65B 25/06, B65B 35/52

(54) **STAPELVORRICHTUNG ZUM ERSTELLEN VON LEBENSMITTELPORTIONEN**

(30) Priorität: 21.12.2021 DE 102021134019; 22.03.2022 DE 102022106685
(71) Anmelder: Weber Maschinenbau GmbH Breidenbach, 35236 Breidenbach (DE)
(72) Erfinder: SCHÄFER, Marvin, Biedenkopf (DE); SCHNEIDER, Thorsten, Weimar/Lahn (DE); NOLTE, Julian, Leun-Biskirchen (DE)
(74) Vertreter: Manitz Finsterwald Patent- und Rechtsanwaltspartnerschaft mbB

(57) **Zusammenfassung**

Eine Stapelvorrichtung (11) zum Erstellen von Lebensmittelportionen umfasst zumindest eine zwischen einer Zuführstellung und einer Ablegestellung bewegbare Produktauflage (51, 53), wobei in der Zuführstellung der Produktauflage (51, 53) eine Teilportion der zu erstellenden Lebensmittelportion entlang einer Förderrichtung auf eine Auflagefläche der Produktauflage (51, 53) förderbar ist und wobei die Stapelvorrichtung (11) dazu ausgebildet ist, die auf die Produktauflage (51, 53) geförderte Teilportion durch Bewegen der Produktauflage (51, 53) in die Ablegestellung unterhalb der Produktauflage (51, 53) abzulegen, insbesondere auf einer zuvor abgelegten Teilportion zu stapeln. In der Produktauflage (51, 53) ist zudem zumindest ein mit einer Einrichtung (81, 83) zum Erzeugen eines Druckunterschieds verbindbarer Pneumatikkanal (17) ausgebildet, welcher zumindest eine Mündung (23) in die Auflagefläche (51, 53) aufweist.

## Beschreibung

Die Erfindung betrifft eine Stapelvorrichtung zum Erstellen von Lebensmittelportionen, welche zumindest eine zwischen einer Zuführstellung und einer Ablegestellung bewegbare Produktauflage umfasst, wobei in der Zuführstellung der Produktauflage eine Teilportion der zu erstellenden Lebensmittelportion entlang einer Förderrichtung auf eine Auflagefläche der Produktauflage förderbar ist. Die Stapelvorrichtung ist dazu ausgebildet, die auf die Produktauflage geförderte Teilportion durch Bewegen der Produktauflage in die Ablegestellung unterhalb der Produktauflage abzulegen und insbesondere auf einer zuvor abgelegten Teilportion zu stapeln.

Bei der Verarbeitung von Lebensmittelprodukten, insbesondere Fleisch- oder Käseprodukten, kann es vorgesehen sein, aus den Lebensmittelprodukten einzelne Lebensmittelportionen zu erstellen und die Lebensmittelportionen zu verpacken, um die Lebensmittelprodukte derart portioniert zum Verkauf anbieten zu können. Beispielsweise können Lebensmittelportionen erstellt werden, indem mittels einer Aufschneidevorrichtung, insbesondere eines sogenannten Hochleistungsslicer, Scheiben von einem Lebensmittelprodukt abgetrennt werden, wobei eine jeweilige Portion eine oder mehrere Scheiben umfassen kann. Die erstellten Portionen können daraufhin beispielsweise an eine Verpackungsmaschine übergeben werden, so dass die Portionen einzeln verpackt und verkauft werden können.

Während es insbesondere bei einem Verkauf der Lebensmittelprodukte bzw. der Lebensmittelportionen an Endverbraucher vorgesehen sein kann, die von der Aufschneidevorrichtung erstellten Portionen einzeln zu verpacken und anzubieten, kann es auch vorgesehen sein, ein Lebensmittelprodukt zwar in mehrere Teilportionen zu unterteilen, die Teilportionen jedoch zu einer gemeinsamen Lebensmittelportion zusammenzufügen und gemeinsam zu verpacken, um Kunden mit einem großen Bedarf an Lebensmittelprodukten, beispielsweise aus der Gastronomie, beliefern zu können. Insbesondere können dazu mehrere Teilportionen aufeinander gestapelt und daraufhin verpackt werden, wobei beispielsweise unter den einzelnen Teilportionen mittels eines sogenannten Underleaver Unterlagen eingebracht werden können, so dass die aufeinander gestapelten Teilportionen in der Packung durch ein Papier oder eine Folie voneinander getrennt und dadurch portionsweise aus der Packung entnehmbar sein können.

Um ein Zusammenstellen mehrerer Teilportionen zu einer gemeinsamen, insbesondere gemeinsam zu verpackenden, Lebensmittelportion zu ermöglichen, können insbesondere Stapelvorrichtungen der eingangs genannten Art vorgesehen sein, die beispielsweise in einer Verarbeitungslinie zwischen einer Aufschneidevorrichtung und einer Verpackungsmaschine eingesetzt werden können. Die etwa von einem Hochleistungsslicer erstellten Teilportionen können in einer solchen Verarbeitungslinie sukzessive auf die Produktauflage der Stapelvorrichtung gefördert und durch Bewegen der Produktauflage in die Ablegestellung unter der Produktauflage, beispielsweise auf einem Transportband, abgelegt werden, so dass ein Stapel mehrerer Teilportionen gebildet und nach Vervollständigen einer Lebensmittelportion an eine Verpackungsmaschine überführt werden kann. Ferner ist denkbar, dass der aus mehreren Teilportionen gebildete Stapel in weiteren Prozessschritten in einer Lebensmittelverarbeitungslinie mit weiteren Teilportionen und/oder Stapeln von Teilportionen zusammengeführt wird, um mit diesen gemeinsam eine vollständige Portion zu bilden.

Die Produktauflagen solcher Stapelvorrichtungen können beispielsweise als aus Kunststoff gefertigte Klappen vorgesehen sein, auf welche die Teilportionen mittels eines Förderbands gewissermaßen aufgeschoben werden. Während eines solchen Aufschiebens kann es jedoch zu Auslenkungen der Teilportionen aufgrund der Reibung zwischen der Teilportion und der Auflagefläche der Produktauflage kommen, so dass die Teilportionen gegebenenfalls nicht exakt auf der Stapelvorrichtung positioniert werden können. Ebenso kann es während des Ablegens einer Teilportion zu solchen Auslenkungen kommen. Derartige Auslenkungen können jedoch dazu führen, dass die Teilportionen nicht exakt oder in vorgesehener Weise abgelegt und aufeinander gestapelt werden, weshalb häufig aufwendige manuelle Kontrollen und Korrekturen von mittels einer solchen Stapelvorrichtung gebildeten Lebensmittelportionen erforderlich sind.

Es ist daher eine Aufgabe der Erfindung, eine Stapelvorrichtung zu schaffen, welche ein exaktes Positionieren der Teilportionen auf der Auflagefläche der Produktauflage sowie ein präzises Ablegen der Teilportionen ermöglicht.

Diese Aufgabe wird gelöst durch eine Stapelvorrichtung mit den Merkmalen des Anspruchs 1 und insbesondere dadurch, dass in der Produktauflage zumindest ein mit einer Einrichtung zum Erzeugen eines Druckunterschieds verbindbarer Pneumatikkanal ausgebildet ist, welcher zumindest eine Mündung in die Auflagefläche aufweist.

Indem in der Produktauflage ein solcher Pneumatikkanal ausgebildet ist, kann durch Verbinden des Pneumatikkanals mit einer Einrichtung zum Erzeugen eines Druckunterschieds ein solcher Druckunterschied auch an der Mündung in die Auflagefläche erzeugt werden. Beispielsweise kann dadurch an der Auflagefläche ein Luftkissen gebildet werden, indem Druckluft durch den Pneumatikkanal geleitet wird, die entsprechend aus der Mündung herausströmt. Ein solches Luftkissen kann insbesondere dazu genutzt werden, das Fördern einer Teilportion auf die Auflagefläche zu unterstützen und ein unkontrolliertes Abbremsen und dadurch bedingtes Auslenken der Teilportion zu verhindern. Ferner kann durch das Verbinden des Pneumatikkanals mit einer Einrichtung zum Erzeugen eines Druckunterschieds beispielsweise auch ein in die Mündung des Pneumatikkanals hinein gerichteter Luftstrom an der Auflagefläche erzeugt werden, indem mittels der Einrichtung zum Erzeugen eines Druckunterschieds ein Vakuum erzeugt und/oder Luft durch den Pneumatikkanal eingesaugt wird. Dies ermöglicht es beispielsweise, die Teilportion bei Erreichen einer gewünschten Position auf der Produktauflage gezielt abzubremsen und/oder an die Produktauflage anzusaugen, um eine Bewegung der Teilportion über diese Position hinaus zu verhindern.

Um eine Unterstützung des Förderns auf die Produktauflage erreichen zu können, kann durch Verbinden des Pneumatikkanals mit der Einrichtung zum Erzeugen eines Druckunterschieds insbesondere ein aus der Mündung heraus gerichteter Luftstrom mit einer Komponente entlang der Förderrichtung erzeugbar sein. Zum Abbremsen und/oder gezielten Positionieren einer Teilportion kann hingegen beispielsweise ein Luftstrom in die Mündung hinein erzeugt werden, welcher eine Komponente entgegen der Förderrichtung aufweisen oder senkrecht in die Produktauflagefläche hinein gerichtet sein kann. Alternativ dazu kann ein Bremsen auch durch eine aus der Mündung heraus gerichtete Luftströmung erzeugt werden, indem diese Luftströmung beispielsweise eine Komponente entgegen der Förderrichtung aufweisen kann. Derartige Führungen der Luftströmung können insbesondere durch eine entsprechende Ausrichtung der zumindest einen Mündung erreicht werden, die beispielsweise in oder entgegen der Förderrichtung geneigt oder senkrecht zu der Förderrichtung ausgerichtet sein kann. Zudem kann der Pneumatickanal mehrere Mündungen in die Auflagefläche aufweisen, um beispielsweise das Fördern einer Teilportion auf die Produktauflage über die gesamte Produktauflage hinweg unterstützen zu können.

Um das erwähnte Luftkissen an der Auflagefläche zum Fördern und/oder Abbremsen einer Teilportion bilden zu können, kann die Einrichtung zum Erzeugen eines Druckunterschieds beispielsweise als eine Drucklufteinrichtung ausgebildet sein und insbesondere ein Gebläse umfassen. Alternativ oder zusätzlich kann die Einrichtung zum Erzeugen eines Druckunterschieds jedoch auch als eine Vakuumeinrichtung ausgebildet sein, um eine Luftströmung in die Auflagefläche hinein erzeugen und die Teilportion beispielsweise abbremsen zu können. Ferner kann es vorgesehen sein, dass die Einrichtung zum Erzeugen eines Druckunterschieds umschaltbar ist, um sowohl einen Druckluftstrom entlang der Auflagefläche als auch eine in die Auflagefläche hinein gerichtete Luftströmung erzeugen und beispielsweise das Fördern einer Teilportion auf die Produktauflage zunächst unterstützen und daraufhin, durch Umschalten der Einrichtung zum Erzeugen eines Druckunterschieds, gezielt abbremsen zu können. Die Einrichtung zum Erzeugen eines Druckunterschieds kann somit beispielsweise eine Drucklufteinrichtung, insbesondere ein Gebläse, und eine Vakuumeinrichtung umfassen. Alternativ dazu können auch jeweilige gesonderte Einrichtungen zum Erzeugen eines Druckluftstroms und eines Vakuums mit dem zumindest einen Pneumatikkanal verbindbar sein, wobei durch jeweiliges Ansteuern dieser Einrichtungen ein Unterstützen des Förderns der Teilportion auf die Produktauflage oder ein Abbremsen der Teilportion erreicht werden kann. Dazu können insbesondere auch mehrere Pneumatikkanäle in der Produktauflage ausgebildet sein, wobei beispielsweise ein Pneumatikkanal zum Verbinden mit einer Drucklufteinrichtung und ein Pneumatikkanal zum Verbinden mit einer Vakuumeinrichtung vorgesehen sein kann.

Ferner kann die Einrichtung zum Erzeugen einer Druckluftströmung grundsätzlich von der Stapelvorrichtung gesondert ausgebildet und wahlweise mit der Stapelvorrichtung verbindbar sein, wobei es alternativ dazu vorgesehen sein kann, dass die Stapelvorrichtung die Einrichtung zum Erzeugen eines Druckunterschieds und/oder eine Drucklufteinrichtung und eine Vakuumeinrichtung umfasst.

Insbesondere kann die Auflagefläche in der Zuführstellung der Produktauflage parallel zu der Förderrichtung ausgerichtet sein. Eine solche Ausrichtung der Auflagefläche kann es ermöglichen, die Teilportionen geradlinig entlang der Förderrichtung auf die Produktauflage aufzuschieben und daraufhin durch Bewegen der Produktauflage in die Ablegestellung gezielt abzulegen. Dazu kann die Produktauflage beispielsweise verschwenkt werden, so dass die Teilportion durch Herabgleiten von der Auflagefläche abgelegt werden kann. Auch dieses Ablegen kann durch die Ausbildung der Produktauflage mit einem Pneumatikkanal präzisiert erfolgen, indem beispielsweise durch Erzeugen einer aus der Mündung heraus gerichteten Druckluftströmung die Reibung zwischen der Teilportion und der Auflagefläche reduziert werden und dadurch eine ungewünschte Auslenkbewegung der Teilportion während des Ablegens verhindert werden kann. Ferner kann es ein gezieltes Erzeugen eines Vakuums an der Mündung beispielsweise ermöglichen, die Teilportion während des Ablegens im Bereich der Mündung gewissermaßen festzuhalten und dadurch das Herabrutschen der Teilportion zu steuern und/oder zu verlangsamen, um ein kontrolliertes Ablegen zu erreichen.

Insbesondere kann die Mündung des Pneumatikkanals in die Auflagefläche durch einen geradlinigen Abschnitt des Pneumatikkanals gebildet sein, welcher durch die Produktauflage hindurch zu der Auflagefläche führt. Insofern kann die Mündung beispielsweise von einem im Inneren der Produktauflage verlaufenden Abschnitt des Pneumatikkanals abzweigen, um eine Verbindung zwischen der Auflagefläche und dem Pneumatikkanal herzustellen.

Weitere Ausführungsformen sind den abhängigen Ansprüchen, der Beschreibung und den Zeichnungen zu entnehmen.

Bei einigen Ausführungsformen kann der Pneumatikkanal einen Anschluss für die Einrichtung zum Erzeugen eines Druckunterschieds an die Produktauflage aufweisen und sich ausgehend von dem Anschluss im Inneren der Produktauflage, zwischen der Auflagefläche und einer der Auflagefläche entgegengesetzten Unterseite der Produktauflage, zu der zumindest einen Mündung erstrecken.

Insbesondere kann der zumindest eine Pneumatikkanal vollständig im Inneren der Produktauflage verlaufen und lediglich in Form der zumindest einen Mündung sowie des Anschlusses Öffnungen aus der Produktauflage heraus aufweisen. Insbesondere kann der Pneumatikkanal somit nicht durch an einer Außenseite der Produktauflage verlaufende Leitungen gebildet, sondern von außen - abgesehen von der zumindest einen Mündung sowie dem Anschluss - an der Produktauflage nicht erkennbar sein. Die Produktauflage kann ferner insbesondere quaderförmig ausgebildet sein und die Auflagefläche kann von einer der beiden größten rechteckigen Flächen bzw. einer Breitseite des Quaders gebildet sein, während der Anschluss an einer der Schmalseite des Quaders ausgebildet sein kann. Zudem kann ein im Inneren der Produktauflage verlaufender Pneumatikkanal nicht durch ein sich von den weiteren Bestandteilen der Produktauflage unterscheidendes Material gebildet sein, sondern unmittelbar durch eine im Inneren der Produktauflage nach Art einer Bohrung verlaufende, jedoch gegebenenfalls geformte und/oder verzweigte, offene Struktur ausgebildet sein. Um einen solchen Pneumatikkanal im Inneren der Produktauflage ausbilden zu können, kann die Produktauflage beispielsweise durch ein 3D-Druck-Verfahren hergestellt sein. Die Einrichtung zum Erzeugen eines Druckunterschieds kann hingegen beispielsweise über eine Leitung mit dem Anschluss des Pneumatikkanals verbindbar sein.

Bei einigen Ausführungsformen kann die Mündung des Pneumatikkanals geneigt zu der Auflagefläche ausgerichtet sein. Bei solchen Ausführungsformen kann ein durch die Mündung verlaufender Luftstrom somit schräg zu der Auflagefläche aus- oder eintreten, um die Teilportion beispielsweise durch einen aus der Mündung heraus gerichteten und mit einer Komponente entlang der Förderrichtung strömenden Luftstrom auf die Auflagefläche fördern zu können. Alternativ dazu kann, ebenfalls durch einen aus der Mündung heraus gerichteten Luftstrom, beispielsweise eine Bremswirkung erreicht werden, indem die Mündung derart geneigt zu der Auflagefläche ausgerichtet ist, dass der aus der Mündung heraustretende Luftstrom eine Komponente entgegen der Förderrichtung aufweist. Auch bei einem Erzeugen eines Vakuums mittels der Einrichtung zum Erzeugen eines Druckunterschieds kann durch eine entsprechend geneigte Ausrichtung der Mündung beispielsweise erreicht werden, dass die auf die Auflagefläche geförderte Teilportion sowohl auf die Auflagefläche angesaugt als auch gegen eine Bewegung entlang der Förderrichtung abgebremst wird.

Die Mündung des Pneumatikkanals kann bei einigen Ausführungsformen in einem spitzen Winkel zu der Auflagefläche ausgerichtet sein. Insbesondere kann die Mündung in einem Winkel zwischen 5 Grad und 30 Grad, bevorzugt in einem Winkel zwischen 10 Grad und 20 Grad, und/oder in einem Winkel von 15 Grad zu der Auflagefläche ausgerichtet sein. Insbesondere durch eine solche Ausrichtung in einem spitzen Winkel kann beispielsweise eine ausreichende Komponente eines aus der Mündung heraus gerichteten Luftstroms entlang der Förderrichtung erreicht werden, um das Fördern einer Teilportion auf die Produktauflage unterstützen zu können.

Bei einigen Ausführungsformen kann eine geradlinige Verlängerung der Mündung des Pneumatikkanals aus der Auflagefläche heraus in der Zuführstellung der Produktauflage einen spitzen Winkel zu der Förderrichtung einnehmen. Insbesondere kann die geradlinige Verlängerung der Mündung aus der Auflagefläche heraus einen Winkel zwischen 5 Grad und 30 Grad, bevorzugt einen Winkel zwischen 10 Grad und 20 Grad und/oder einen Winkel von 15 Grad zu der Förderrichtung einnehmen. Bei solchen Ausführungsformen kann ein von der Einrichtung zum Erzeugen eines Druckunterschieds erzeugter Druckluftstrom an der Auflagefläche somit insbesondere eine Komponente entlang der Förderrichtung aufweisen, so dass durch Beaufschlagen des Pneumatikkanals mit Druckluft das Fördern einer Teilportion auf die Produktauflage unterstützt werden kann. Ein in eine derart ausgerichtete Mündung durch Ansaugen von Luft eintretender Luftstrom kann hingegen eine Komponente entgegen der Förderrichtung aufweisen, um beispielsweise eine Bremswirkung erreichen zu können. Alternativ dazu kann es bei anderen Ausführungsformen jedoch auch vorgesehen sein, dass eine geradlinige Verlängerung der Mündung des Pneumatikkanals aus der Auflagefläche heraus in der Zuführstellung der Produktauflage einen stumpfen Winkel, insbesondere einen Winkel in einem Bereich von 180 Grad abzüglich eines der vorstehend genannten spitzen Winkel und/oder einen Winkel von 165 Grad, zu der Förderrichtung einnimmt und somit entgegen der Förderrichtung ausgerichtet ist. Dies kann es ermöglichen, durch Beaufschlagen des Pneumatikkanals mit Druckluft an der Auflagefläche eine Luftströmung entgegen der Förderrichtung zu erzeugen, um eine auf die Produktauflage geförderte Teilportion gezielt abbremsen zu können.

Bei einigen Ausführungsformen kann die Mündung des Pneumatikkanals in Richtung eines mittigen Abschnitts der Auflagefläche ausgerichtet sein. Insbesondere kann die Mündung des Pneumatikkanals in Richtung eines bezüglich einer senkrecht zu der Förderrichtung ausgerichteten Querrichtung mittigen Abschnitts der Auflagefläche ausgerichtet sein. Durch eine solche Ausrichtung der Mündung kann beispielsweise ein aus der Mündung heraus gerichteter Druckluftstrom in Richtung des mittigen Abschnitts der Auflagefläche erzeugt werden, um eine Zentrierung der Teilportion auf der Produktauflage erreichen und die Teilportion während des Förderns auf die Produktauflage seitlich stabilisieren zu können.

Ferner kann die Mündung bei einigen Ausführungsformen senkrecht zu der Auflagefläche ausgerichtet sein. Insbesondere kann eine solche senkrecht zu der Auflagefläche ausgerichtete Mündung vorgesehen sein, wenn die Einrichtung zum Erzeugen eines Druckunterschieds zum Ansaugen von Luft durch die Mündung ausgebildet bzw. der Pneumatikkanal mit einer Vakuumeinrichtung verbindbar ist. Bei einer solchen Ausrichtung kann ein senkrecht in die Auflagefläche hinein gerichteter Luftstrom erzeugt werden, um eine auf die Produktauflage geförderte Teilportion anzusaugen und dadurch beispielsweise abbremsen und gezielt auf der Produktauflage positionieren zu können. Ebenso kann durch einen solchen in die Produktauflage hinein gerichteten Luftstrom beispielsweise während eines Ablegens einer Teilportion ein etwaiges Herabrutschen der Teilportion, um diese abzulegen und auf einer vorabgelegten Teilportion zu stapeln, kontrolliert und verlangsamt werden oder die Reibung zwischen der Teilportion und der Auflagefläche kann durch einen aus einer solchen Mündung herausströmenden Druckluftstrom vor und/oder während des Ablegens gezielt verringert werden.

Bei einigen Ausführungsformen kann die Mündung als flache Senkung, als flacher Trichter oder als eine Mulde ausgebildet sein und/oder in eine an der Auflagefläche ausgebildete flache Rille übergehen. Insbesondere kann durch eine solche Ausbildung der Mündung ein durch Beaufschlagen des Pneumatikkanals mit Druckluft an der Auflagefläche erzeugter Luftstrom unterstützt und/oder geführt werden, um ein gezieltes Fördern einer Teilportion auf die Produktauflage und/oder ein gezieltes Ablegen der Teilportion zu ermöglichen.

Der Pneumatikkanal kann bei einigen Ausführungsformen mehrere Mündungen in die Auflagefläche aufweisen. Wie bereits erläutert, kann dadurch insbesondere ein Unterstützen des Förderns einer Teilportion auf die Produktauflage an mehreren Stellen der Produktauflage und/oder ein gezieltes Abbremsen einer Teilportion an mehreren Stellen der Produktauflage erreicht werden.

Bei einigen Ausführungsformen kann der Pneumatikkanal einen Anschlussabschnitt zum Verbinden des Pneumatikkanals mit der Einrichtung zum Erzeugen eines Druckunterschieds, einen Versorgungsabschnitt und mehrere von dem Versorgungsabschnitt abzweigende Arbeitsabschnitte aufweisen. Ferner kann der Versorgungsabschnitt bei solchen Ausführungsformen den Anschlussabschnitt bilden oder in den Anschlussabschnitt übergehen und jeder der Arbeitsabschnitte kann zumindest zu einer jeweiligen Mündung in die Auflagefläche führen. Es kann bei einigen Ausführungsformen auch vorgesehen sein, dass der Anschlussabschnitt als Arbeitsabschnitt fungiert, indem der Anschlussabschnitt des Pneumatickanals mit zumindest einer Mündung in die Auflagefläche kommunizieren kann.

Insbesondere kann der Anschlussabschnitt des Pneumatikkanals den bereits genannten Anschluss für die Einrichtung zum Erzeugen eines Druckunterschieds bilden, wobei der Anschluss insbesondere eine Öffnung des Anschlussabschnitts an einer Außenseite der Produktauflage darstellen kann. Der Versorgungsabschnitt kann sich beispielsweise entlang der Förderrichtung erstrecken, wobei durch die mehreren abzweigenden Arbeitsabschnitte entlang der Förderrichtung versetzt zueinander angeordnete Mündungen mit der Einrichtung zum Erzeugen eines Druckunterschieds verbunden werden können. Insbesondere kann jeder der mehreren Arbeitsabschnitte zu mehreren dem jeweiligen Arbeitsabschnitt zugeordneten Mündungen führen, um beispielsweise mehrere entlang einer Erstreckungsrichtung des Arbeitsabschnitts, insbesondere einer zu der Förderrichtung senkrecht ausgerichteten Querrichtung, versetzt zueinander angeordnete Mündungen mit der Einrichtung zum Erzeugen eines Druckunterschieds verbinden zu können.

Bei einigen Ausführungsformen kann der Versorgungsabschnitt parallel zu der Förderrichtung ausgerichtet sein. Ferner können die Arbeitsabschnitte parallel zueinander und/oder senkrecht zu der Förderrichtung ausgerichtet sein. Insbesondere können die Arbeitsabschnitte senkrecht zu der Förderrichtung von einem sich parallel zu der Förderrichtung erstreckenden Versorgungsabschnitt abzweigen, um dadurch entlang der Förderrichtung versetzt zueinander angeordneten Mündungen mit der Einrichtung zum Erzeugen eines Druckunterschieds verbinden zu können. Der parallel zu der Förderrichtung verlaufende Versorgungsabschnitt kann insbesondere in einem Randbereich der Produktauflage verlaufen, so dass sich die Arbeitsabschnitte ausgehend von dem Randbereich in die Mitte und/oder zu dem entgegengesetzten Randbereich der Produktauflage erstrecken können. Alternativ dazu kann der Versorgungsabschnitt jedoch auch beispielsweise in einem mittleren Bereich der Produktauflage verlaufen, wobei die Arbeitsabschnitte beispielsweise beidseitig senkrecht zu der Förderrichtung von dem Arbeitsabschnitt abzweigen können, um in Randbereichen der Produktauflage angeordnete Mündungen mit der Einrichtung zum Erzeugen eines Druckunterschieds verbinden zu können.

Bei einigen Ausführungsformen kann der Anschlussabschnitt von dem Versorgungsabschnitt abzweigen. Insbesondere kann der Anschlussabschnitt zudem senkrecht zu der Förderrichtung ausgerichtet sein und/oder zu zumindest einer Mündung in die Auflagefläche führen.

Beispielsweise kann es eine Ausrichtung des Anschlussabschnitts senkrecht zu der Förderrichtung ermöglichen, den bereits erwähnten Anschluss für die Einrichtung zum Erzeugen eines Druckunterschieds bezogen auf die Förderrichtung seitlich an der Produktauflage auszubilden und die Einrichtung zum Erzeugen eines Druckunterschieds entsprechend seitlich anzuschließen. Zum Anschließen des Pneumatickanals kann eine entsprechende Leitung dadurch insbesondere in einer seitlichen Befestigung für die Produktauflage verlaufen, so dass die Leitungen nicht in einem Bereich angeordnet werden müssen, in welchem die Teilportionen während des Förderns und/oder Ablegens bewegt werden.

Ferner können in der Produktauflage bei einigen Ausführungsformen mehrere Pneumatikkanäle ausgebildet sein, die insbesondere gleiche oder unterschiedliche Funktionen ausfüllen können. Jeder der Pneumatikkanäle kann dabei insbesondere einen jeweiligen Anschlussabschnitt aufweisen, so dass die einzelnen Pneumatikkanäle mit jeweiligen Einrichtungen zum Erzeugen eines Druckunterschieds verbindbar und/oder wahlweise mit der Einrichtung zum Erzeugen eines Druckunterschieds verbindbar sein können. Eine Ansteuerung verschiedener Pneumatikkanäle kann beispielsweise durch eine pneumatische Schaltung mit Ventilen oder Ventillinsen erfolgen, wobei eine solche Schaltung insbesondere in einer Welle, an welcher die Produktauflage befestigt ist, angeordnet sein kann. Eine solche Anordnung in der Welle kann insbesondere einen platzsparenden Einbau der Schaltung ermöglichen.

Beispielsweise kann es vorgesehen sein, dass die Produktauflage einen Pneumatikkanal zum Erzeugen eines Druckluftstroms und einen Pneumatikkanal zum Erzeugen eines Vakuums und/oder zum Einsaugen von Luft an der Produktauflagefläche aufweist. Es kann jedoch auch vorgesehen sein, dass die Produktauflage mehrere Pneumatikkanäle zum Erzeugen eines Druckluftstroms und/oder mehrere Pneumatikkanäle zum Erzeugen eines Vakuums und/oder zum Einsaugen von Luft aufweist. Dies kann es beispielsweise ermöglichen, einen erzeugten Druckluftstrom durch Verbinden eines jeweiligen Pneumatickanals mit der Einrichtung zum Erzeugen eines Druckunterschieds, etwa mittels einer Ventilschaltung, zu steuern. Beispielsweise kann es vorgesehen sein, den Druckluftstrom in Abhängigkeit von zuvor erfassten Parametern einer Verarbeitungslinie und/oder einer Teilportion einzustellen, was durch eine entsprechende Auswahl des genutzten Pneumatikkanals erfolgen kann. Berücksichtigt werden können dabei insbesondere eine Liniengeschwindigkeit, ein Teilportionsgewicht, eine Lage der Teilportion oder eine etwaige Verdrehung der Teilportion.

Die Mündungen können bei einigen Ausführungsformen entlang der Förderrichtung und/oder quer zu der Förderrichtung versetzt zueinander angeordnet sein. Wie bereits erläutert, kann dadurch insbesondere die gewünschte Förder- und/oder Bremswirkung über die gesamte Auflagefläche erreicht werden.

Die Mündungen können ferner mit einem konstanten Abstand entlang der Förderrichtung und/oder quer zu der Förderrichtung zueinander angeordnet sein oder der Abstand der Mündungen zueinander kann entlang der Förderrichtung und/oder quer zu der Förderrichtung variieren. Beispielsweise kann es vorgesehen sein, dass eine größere Zahl von Mündungen an einer Aufnahmeseite der Produktauflage und somit an der Seite der Produktauflage ausgebildet ist, an welcher die Teilportionen auf die Produktauflage gelangen, als in einem mittleren Bereich der Produktauflage. Dadurch kann insbesondere das Fördern der Teilportionen in einem Bereich unterstützt werden, in welchem die Stapelvorrichtung die Teilportionen etwa von einem vorgelagerten Förderband übernimmt. Ebenso können an einer der Aufnahmeseite entgegengesetzten Seite der Produktauflage vermehrt Mündungen angeordnet sein, um die Teilpositionen zuverlässig abbremsen zu können. Ferner können beispielsweise mehr Mündungen an Randabschnitten der Auflagefläche als in der Mitte der Auflagefläche vorgesehen sein, um eine Zentrierung der Teilportionen auf der Produktauflage durch einen entsprechend gerichteten Luftstrom erreichen zu können. Grundsätzlich kann somit die Dichte der Mündungen an der Auflagefläche variieren, wobei jedoch auch eine konstante Dichte an Mündungen vorgesehen sein kann.

Die Mündungen können bei einigen Ausführungsformen in mehreren, insbesondere in zwei, drei, vier, fünf oder sechs, quer zu der Förderrichtung ausgerichteten Reihen angeordnet sein. Insbesondere können diese Reihen einem jeweiligen der vorstehend genannten Arbeitsabschnitte zugeordnet und die Mündungen einer jeweiligen Reihe mit dem zugeordneten Arbeitsabschnitt verbunden sein. Ferner können sich die Reihen senkrecht zu der Förderrichtung und/oder parallel zueinander erstrecken. Jeder der Reihen können darüber hinaus mehrere Mündungen, insbesondere zwei, drei, vier, fünf oder sechs Mündungen, zugeordnet sein.

Bei einigen Ausführungsformen können die Mündungen in einer zu der Auflagefläche parallelen Ebene eine gleiche oder eine unterschiedliche Querschnittsfläche aufweisen. Alternativ oder zusätzlich können die Mündungen bei einigen Ausführungsformen in einer zu der Auflagefläche parallelen Ebene eine gleiche oder eine unterschiedliche Querschnittsform aufweisen.

Beispielsweise können die Mündungen eine kreisförmige, ellipsenförmige oder rechteckige Querschnittsform aufweisen, wobei sämtliche der mehreren Mündungen dieselbe Querschnittsform oder verschiedene Mündungen verschiedene Querschnittsformen aufweisen können. Darüber hinaus können verschiedene Mündungen, bedingt durch eine unterschiedliche Querschnittsform oder auch bei einer gleichen Querschnittsform, verschiedene Querschnittsflächen aufweisen oder die mehreren Mündungen können, ebenfalls bei gleicher oder unterschiedlicher Querschnittsform, stets dieselbe Querschnittsfläche aufweisen. Auch durch eine Anpassung der Querschnittsfläche und/oder der Querschnittsform kann auf den aus der jeweiligen Mündung austretenden und/oder eintretenden Luftstrom eingewirkt werden, um ein möglichst präzises und/oder abschnittsweise angepasstes Fördern oder Abbremsen von Teilportionen zu ermöglichen.

Die Mündungen können bei einigen Ausführungsformen in einem Randabschnitt der Auflagefläche näher aneinander angeordnet sein als in einem Mittenabschnitt der Auflagefläche. Insbesondere kann eine solche höhere Dichte von Mündungen in einem Randabschnitt der Auflagefläche bei einer Ausrichtung der Mündungen in Richtung des Mittenabschnitts der Auflagefläche vorgesehen sein, um beispielsweise eine Teilportion während des Förderns auf die Produktauflage zentrieren zu können.

Die Produktauflage kann bei einigen Ausführungsformen an einer Außenseite mit einer drehbaren Welle verbunden sein, wobei die Produktauflage durch Drehen der Welle von der Zuführstellung in die Ablegestellung verschwenkbar sein kann. Insbesondere kann die Produktauflage durch Drehen der Welle um 90 Grad von der Zuführstellung in die Ablegestellung verschwenkbar sein.

Die Verbindung der Produktauflage mit der Welle kann z.B. durch einen oder mehrere manuell betätigbare Schnellspanner erfolgen, so dass die Produktauflage werkzeuglos und folglich schnell und einfach montiert und z.B. zu Reinigungs-
oder Austauschzwecken abgenommen werden kann.

Die Produktauflage kann bei solchen Ausführungsformen somit gewissermaßen als eine Klappe ausgebildet sein, auf welcher eine Teilportion zunächst gefördert werden kann, um die Teilportion durch Verschwenken der Klappe abzulegen. Um ein sukzessives Ablegen aufeinanderfolgender Teilportionen zu ermöglichen, kann die Welle beispielsweise in entgegengesetzten Drehrichtungen drehbar sein, so dass die Produktauflage nach dem Ablegen einer Teilportion durch dem Ablegen entgegengesetztes Drehen der Welle, insbesondere um 90 Grad, wieder von der Ablegestellung in die Zuführstellung überführt werden kann. Es kann jedoch auch vorgesehen sein, dass die Welle entlang einer einzigen Drehrichtung drehbar ist, um die Produktauflage zwischen der Ablegestellung und der Zuführstellung zu bewegen. Bei solchen Ausführungsformen kann es beispielsweise vorgesehen sein, dass mehrere Produktauflagen um einen bestimmten Winkel versetzt an der Welle angeordnet sind, so dass durch Drehen der Welle um den bestimmten Winkel eine Teilportion abgelegt und gleichzeitig eine folgende Produktauflage in die Zuführstellung gebracht werden kann, um eine nachfolgende Teilportion auf folgende Produktauflage fördern zu können. Alternativ dazu ist es jedoch auch möglich, dass die Welle im Zuge eines Ablegens einer Teilportion um 360 Grad gedreht wird, so dass die Produktauflage automatisch über die Ablegestellung wieder in die Zuführstellung zurück geführt werden kann, um die nachfolgende Teilportion aufzunehmen.

Bei einigen Ausführungsformen kann in der drehbaren Welle zumindest eine Pneumatikleitung ausgebildet sein, über welche der zumindest eine Pneumatikkanal mit der Einrichtung zum Erzeugen eines Druckunterschieds verbindbar ist. Insbesondere kann der zumindest eine Pneumatikkanal dazu einen quer zu der Förderrichtung ausgerichteten Anschlussabschnitt zum Anschließen an die Pneumatikleitung aufweisen, welcher einen Anschluss für die Pneumatikleitung an einer Seite der Produktauflage bilden kann. Die Pneumatikleitung kann dadurch im Inneren der Welle geführt sein, so dass die Verbindung der Einrichtung zum Erzeugen eines Druckunterschieds mit der Produktauflage erfolgen kann, ohne dass Leitungen außerhalb der sonstigen Komponenten der Stapelvorrichtung verlaufen müssen.

Bei einigen Ausführungsformen kann die Welle über eine Reibkupplung mit einem Motor zum Antreiben der Welle verbunden sein. Insbesondere kann die Welle, an welcher die Produktauflage befestigt ist, durch eine Reibkupplung mit einer Motorwelle des Motors verbunden sein, so dass das von dem Motor auf die Welle übertragbare Drehmoment begrenzt und festgelegt werden kann. Entsprechend kann die Reibkupplung derart ausgelegt sein, dass die an der Welle befestigte Produktauflage nur mit einer gewissen Maximalkraft bewegt werden kann.

Eine solche Verbindung zwischen der Welle und dem Motor ermöglicht es insbesondere, auf aufwändige Sicherheitsvorkehrungen zu verzichten und vorgegebenen Sicherheitsanforderungen dennoch zu entsprechen. Insbesondere kann es bei Stapelvorrichtungen der in der vorliegenden Anmeldung beschrieben Art grundsätzlich erforderlich sein, einen Eingriffsschutz anzubringen, um ein Eingreifen in den Bereich der Produktauflagen durch einen Benutzer während des Betriebs zu verhindern und dadurch hervorgerufene Verletzungen zu verhindern. Indem durch die Reibkupplung, die auch als Rutschkupplung bezeichnet werden kann, die von den Produktauflagen übertragbare Kraft begrenzt werden kann, können die relevanten Sicherheitsnormen insbesondere bereits durch ein kleineres Gehäuse als Eingreifschutz oder auch ohne Eingriffsschutz zu erfüllen sein. Dadurch kann ein verbesserter Zugang zu den Produktauflagen, etwa zu Wartung- oder Reinigungszwecken, ermöglicht werden, ohne relevante Sicherheitseinbußen in Kauf nehmen zu müssen.

Bei einigen Ausführungsformen kann in der Produktauflage zumindest ein erster Pneumatikkanal ausgebildet sein, welcher mit einer Drucklufteinrichtung zum Erzeugen von Druckluft verbindbar ist und welcher zumindest eine Druckluftmündung in die Auflagefläche aufweist, und in der Produktauflage kann zumindest ein zweiter Pneumatikkanal ausgebildet sein, welcher mit einer Vakuumeinrichtung zum Erzeugen eines Vakuums verbindbar ist und welcher zumindest eine Vakuummündung in die Auflagefläche aufweist.

Dementsprechend können insbesondere auch zwei Pneumatikleitungen in einer Welle ausgebildet sein, mit welcher die Produktauflage zum Bewegen der Produktauflage zwischen der Zuführstellung und der Ablegestellung verbunden ist, um die beiden Pneumatikkanäle mit der entsprechenden Drucklufteinrichtung bzw. Vakuumeinrichtung verbinden zu können.

Bei einer solchen Ausbildung der Produktauflage kann sowohl eine Druckluftströmung entlang der Auflagefläche als auch eine in die Auflagefläche hinein gerichtete Luftströmung erzeugt werden, um wahlweise das Fördern einer Teilportion auf die Produktauflage unterstützen oder die Teilportion abbremsen und gezielt auf der Produktauflage positionieren zu können. Insbesondere können die beiden Pneumatikkanäle die zuvor genannten Merkmale aufweisen und beispielsweise einen jeweiligen Anschlussabschnitt, einen jeweiligen Versorgungsabschnitt und mehrere jeweilige Arbeitsabschnitte aufweisen, welche von dem Versorgungsabschnitt abzweigen. Ebenso können die Druckluftmündungen und die Vakuummündungen die vorstehend im Zusammenhang mit der zumindest einen Mündung genannten Merkmale aufweisen und beispielsweise geneigt oder senkrecht zu der Förderrichtung ausgerichtet sein.

Bei einigen Ausführungsformen kann die zumindest eine Druckluftmündung geneigt zu der Auflagefläche ausgerichtet sein und die zumindest eine Vakuummündung kann senkrecht zu der Auflagefläche ausgerichtet sein. Ferner kann es vorgesehen sein, dass die Druckluftmündung und die Vakuummündung einen unterschiedlichen Querschnitt, insbesondere eine unterschiedliche Querschnittsform und/oder eine unterschiedliche Querschnittsfläche, oder einen gleichen Querschnitt, insbesondere eine gleiche Querschnittsform und/oder eine gleiche Querschnittsfläche, aufweisen. Ferner kann die zumindest eine Druckluftmündung insbesondere derart geneigt zu der Auflagefläche ausgerichtet sein, dass ein aus der Druckluftmündung austretender Druckluftstrom eine Komponente in Richtung der Förderrichtung aufweist, um das Fördern von einer Teilportion auf die Produktauflage unterstützen zu können. Die zumindest eine Druckluftmündung kann zudem in Richtung eines Mittenabschnitts der Produktauflage ausgerichtet sein, um eine Teilportion auf der Produktauflage zentrieren zu können.

Ferner kann die Produktauflage bei einigen Ausführungsformen mehrere wahlweise mit der Drucklufteinrichtung verbindbare erste Pneumatikkanäle mit zumindest einer jeweiligen Druckluftmündung und/oder mehrere wahlweise mit der Vakuumeinrichtung verbindbare zweite Pneumatikkanäle mit zumindest einer jeweiligen Vakuummündung aufweisen, wobei sich eine Anordnung und/oder ein Querschnitt der Druckluftmündungen verschiedener erster Pneumatikkanäle und/oder der Vakuummündungen verschiedener zweiter Pneumatikkanäle voneinander unterscheiden können bzw. kann. Insbesondere können sich somit auch die jeweiligen durch Anschließen verschiedener erster Pneumatikkanäle bzw. zweiter Pneumatikkanäle erzeugbaren Luftströme voneinander unterscheiden, so dass beispielsweise durch Verändern des jeweiligen mit einer Einrichtung zum Erzeugen eines Druckunterschieds verbundenen ersten Pneumatickanals bzw. zweiten Pneumatikkanals eine Anpassung des erzeugbaren Luftstroms an ein bestimmtes Produkt bzw. Eigenschaften einer zu verarbeitenden Teilportion erreicht werden kann. Insbesondere können die Luftströmungen beispielsweise in Abhängigkeit von einem Gewicht und/oder einer Größe der zu verarbeitenden Teilportionen bei einer solchen Ausbildung der Produktauflage anpassbar sein.

Die Stapelvorrichtung kann bei einigen Ausführungsformen eine Steuereinrichtung zum Steuern der Einrichtung zum Erzeugen eines Druckunterschieds umfassen.

Bei einigen Ausführungsformen kann die Steuereinrichtung dazu ausgebildet sein, die Einrichtung zum Erzeugen eines Druckunterschieds während des Förderns der Teilportionen auf die Produktauflage zunächst zum Beaufschlagen des zumindest einen Pneumatikkanals mit Druckluft und darauffolgend zum Ansaugen von Luft durch den zumindest einen Pneumatikkanal anzusteuern. Durch ein derartiges Ansteuern der Einrichtung zum Erzeugen eines Druckunterschieds kann somit zunächst ein Luftkissen an der Auflagefläche erzeugt werden, um eine Teilportion beispielsweise auf die Produktauflage zu fördern, woraufhin die Teilportion kurz vor oder bei einem Erreichen der gewünschten Position durch Ansaugen von Luft durch den zumindest einen Pneumatikkanal gegen eine Bewegung entlang der Förderrichtung gebremst und dadurch auf der Produktauflage positioniert werden kann.

Um ein solches Ansteuern der Einrichtung zum Erzeugen eines Druckunterschieds zu ermöglichen, kann die Steuereinrichtung beispielsweise dazu ausgebildet sein, eine sowohl zum Erzeugen eines Druckluftstroms als auch zum Erzeugen eines Vakuums ausgebildete Einrichtung zum Erzeugen eines Druckunterschieds gezielt umzuschalten oder jeweilige getrennte Einrichtungen anzusteuern. Insofern kann die Steuereinrichtung bei Ausführungsformen der Stapelvorrichtung mit einer Produktauflage, die einen ersten Pneumatikkanal zum Anschließen einer Drucklufteinrichtung und einen zweiten Pneumatikkanal zum Anschließen einer Vakuumeinrichtung aufweist, dazu ausgebildet sein, die Drucklufteinrichtung dazu anzusteuern, einen Druckluftstrom in dem ersten Pneumatikkanal zu erzeugen, um ein Luftkissen entlang der Auflagefläche auszubilden, und daraufhin die Vakuumeinrichtung dazu anzusteuern, Luft durch den zweiten Pneumatikkanal anzusaugen. Insbesondere kann die Einrichtung zum Erzeugen eines Druckunterschieds bzw. können die Drucklufteinrichtung und die Vakuumeinrichtung ferner Teil der Stapelvorrichtung und/oder mit der Stapelvorrichtung verbunden sein.

Bei einigen Ausführungsformen kann die Stapelvorrichtung eine Messeinrichtung zum Erfassen der auf die Produktauflage geförderten Teilportion aufweisen, wobei die Steuereinrichtung dazu ausgebildet sein kann, die Einrichtung zum Erzeugen eines Luftstroms in Abhängigkeit von einem Signal der Messeinrichtung anzusteuern.

Beispielsweise kann eine solche Messeinrichtung bezogen auf die Förderrichtung vorne, in der Mitte oder hinten an der Stapelvorrichtung angeordnet sein und/oder eine oder mehrere oberhalb der Produktauflage angeordnete Lichtschranken umfassen. Dies kann es ermöglichen, die Position einer auf die Produktauflage geförderten Teilportion zu bestimmen, um beispielsweise eine Druckluftströmung zum Unterstützen des Förderns der Teilportion auf die Produktauflage zu starten, wenn oder kurz bevor eine Teilportion auf die Produktauflage gelangt, und/oder die Teilportion abzubremsen, sobald ein vorderer Abschnitt der Teilportion die Mitte der Auflagefläche erreicht, die Mitte überschreitet oder eine vorgesehene Endposition erreicht.

Zudem kann die Produktauflage bei einigen Ausführungsformen lösbar, insbesondere werkzeuglos lösbar, an der Stapelvorrichtung befestigbar sein. Beispielsweise kann die Produktauflage auf eine oder mehrere Wellen, durch deren Drehung die Produktauflage zwischen der Zuführstellung und der Ablegestellung bewegbar sein kann, aufsteckbar sein, um etwa für eine Reinigung werkzeuglos und schnell entnommen und nach dem Reinigen wieder mit der Welle verbunden werden zu können.

Die Auflagefläche kann ferner bei einigen Ausführungsformen eine Rillen-, Beulen-, Wellen- oder Kreuzstruktur aufweisen. Auch durch eine solche Struktur der Auflagefläche kann die Förderwirkung unterstützt und/oder eine Reibungsreduktion beim Ablegen einer Teilportion erreicht werden. Beispielsweise können ungewünschte Auslenkungen der Teilportion während des Ablegens durch eine senkrecht zu der Förderrichtung verlaufende Rillenstruktur der Auflagefläche reduziert werden.

Ferner kann die Auflagefläche durch die Produktauflage hindurchgehende Löcher aufweisen. Auch durch solche Löcher kann die Reibung zwischen einer Teilportion und der Auflagefläche während des Förderns der Teilportion auf die Produktauflage und/oder während des Ablegens der Teilportion reduziert werden.

Die Stapelvorrichtung kann bei einigen Ausführungsformen zumindest eine erste Produktauflage und eine zweite Produktauflage umfassen, welche in der Zuführstellung parallel zueinander ausgerichtet sind und gemeinsam die Auflagefläche bilden. Ferner können die erste Produktauflage und die zweite Produktauflage an einander entgegengesetzten Außenseiten mit einer jeweiligen Welle verbunden sein, wobei die erste Produktauflage und die zweite Produktauflage durch gegensinniges Drehen der Wellen aus der Zuführstellung in die Ablegestellung verschwenkbar sein können. Insbesondere können die Teilportionen dadurch an jeweiligen einander entgegengesetzten Außenseiten bzw. den Wellen zugewandten Seiten während des Ablegens an den Produktauflagen entlanggleiten, um gezielt und zunächst mit einem mittleren Abschnitt zwischen zwei sich öffnenden Klappen abgelegt zu werden.

Bei einigen Ausführungsformen kann ein gemeinsamer Motor zum Antreiben der Wellen vorgesehen sein. Dazu können die Wellen insbesondere über einen Gurt oder einen Riemen mit einer Motorwelle des gemeinsamen Motors verbunden sein, um durch eine entsprechende Umlenkung ein gegensinniges Drehen der Wellen erreichen zu können.

Insbesondere kann bei solchen Ausführungsformen mit zwei Produktauflagen ein Zahnriemen oder ein Gurt zum gemeinsamen Antreiben der zugeordneten Wellen sowie eine Übertragung des Antriebs über die bereits erwähnte Reibkupplung auf eine der Wellen vorgesehen sein. Dadurch kann bei einem Auslösen der Reibkupplung ein synchrones Anhalten der Wellen und eine gleichbleibende Synchronisation der Wellen sicherstellt werden.

Ferner können bei einigen Ausführungsformen an jeder der Wellen mehrere Produktauflagen in einem konstanten Abstand zueinander angeordnet sein. Insbesondere können an jeder der Wellen zwei oder vier Produktauflagen angeordnet sein. Der konstante Abstand kann sich insbesondere auf eine Winkelstellung beziehen, in welcher die Produktauflagen angeordnet sind. Dies kann es beispielsweise ermöglichen, durch Bewegen einer ersten Produktauflage von der Zuführstellung in die Ablegestellung die darauffolgende Produktauflage in die Zuführstellung zu bewegen, so dass eine nachfolgende Teilportion unmittelbar auf die darauffolgende Produktauflage gefördert werden kann.

Bei einigen Ausführungsformen kann vorgesehen sein, dass die Einrichtung zum Erzeugen eines Druckunterschieds zumindest eine entfernt von der Produktauflage gelegene Einrichtung zum Erzeugen von Druckluft und wenigstens einen im Bereich oder unmittelbar an der Produktauflage gelegenen, bevorzugt an der Produktauflage befestigten, Vakuum-Erzeuger umfasst, der an die Einrichtung zum Erzeugen von Druckluft angeschlossen, mit dem in der Produktauflage ausgebildeten Pneumatikkanal verbunden und dazu ausgebildet ist, mittels zugeführter Druckluft einen Unterdruck zu erzeugen, insbesondere wobei der Vakuum-Erzeuger zumindest eine Venturi-Düse umfasst.

Derartige Vakuum-Erzeuger sind für sich genommen bekannt und auf dem Markt als gebrauchsfertige Einheiten erhältlich und werden auch als Ejektoren oder Vakuum-Ejektoren bezeichnet, die z.B. eine oder mehrere Venturi-Düsen aufweisen können, um unter Verwendung der über einen Anschluss zugeführten Druckluft an einem anderen Anschluss einen Unterdruck zu erzeugen. Derartige Vakuum-Erzeuger können relativ kompakt ausgebildet sein und müssen lediglich an eine Druckluftquelle angeschlossen und mit ihrem Vakuum-Anschluss an die jeweilige mit Unterdruck zu beaufschlagende Einrichtung - hier an die Produktauflage, d.h. an den darin ausgebildeten Pneumatikkanal - angeschlossen werden. Ersteres kann z.B. einfach über einen herkömmlichen Druckluftschlauch erfolgen. Letzteres kann z.B. dadurch erfolgen, dass der Vakuum-Erzeuger über seinen Vakuum-Anschluss mittelbar - z.B. über einen Schlauch - oder unmittelbar - ggf. unter Zwischenlage einer Dichtung beispielsweise in Form eines O-Rings - mit einem in der Produktauflage, z.B. auf deren Auflagefläche oder an einer der anderen Außenseiten der Produktauflage, ausgebildeten Anschluss verbunden wird, der zum Pneumatikkanal führt oder der den Anfang des Pneumatikkanals bildet.

Derartige Vakuum-Erzeuger können dezentral eingesetzt werden und eine zentrale, entfernt von der Produktauflage gelegene Vakuumquelle, die vergleichsweise lange Saugwege und dabei insbesondere relativ hohe Leitungswiderstände überwinden müsste, überflüssig machen. Druckluft steht in der Praxis ohnehin häufig an der jeweiligen Maschine zur Verfügung, wird in einigen Ausführungsbeispielen der Erfindung ohnehin benötigt und kann so auch für die Vakuumerzeugung verwendet werden. Doppelte Leitungen für Überdruck einerseits und Unterdruck andererseits und/oder die Notwendigkeit eines Umschaltens zwischen "Blasen" einerseits und "Saugen" andererseits werden vermieden. Da die Vakuum-Erzeuger relativ kompakt ausgeführt sein können, können sie "vor Ort", also unmittelbar an oder zumindest in der Nähe der Produktauflage montiert werden, und zwar in einer an die jeweiligen baulichen Gegebenheiten und an die jeweiligen Anforderungen an die Vakuumerzeugung angepassten Weise und Anzahl.

Einer jeweiligen Produktauflage kann genau ein Vakuum-Erzeuger oder können mehrere Vakuum-Erzeuger zugeordnet sein.

Wenn die Produktauflage an einer drehbaren Welle angebracht ist, kann diese eingangsseitig mit der Einrichtung zum Erzeugen von Druckluft verbunden und ausgangsseitig - z.B. über eine Druckluftleitung - an den Vakuum-Erzeuger angeschlossen sein. Hierdurch kann die Länge von frei zu verlegenden Druckluftleitungen unter Ausnutzung der Vor-Ort-Installierbarkeit des oder der Vakuum-Erzeuger auf ein Minimum reduziert werden.

Gemäß manchen Ausführungsbeispielen kann vorgesehen sein, dass im Falle einer Vakuumerzeugung an wenigstens einer grundsätzlich beliebigen Stelle zwischen der Vakuumquelle oder der Vakuummündung, z.B. am die Vakuummündung aufweisenden Pneumatikkanal, eine Belüftungsmöglichkeit vorgesehen ist, z.B. in Form einer Belüftungsöffnung, die permanent oder verschließbar sein kann und die insbesondere - wie eine Blende oder wie eine einstellbare Drossel - hinsichtlich ihrer Größe einstellbar sein kann. Hierdurch kann nach dem Ablegen einer jeweiligen Teilportion eine automatische Belüftung stattfinden, die sicherstellt, dass für eine jeweilige nächste Teilportion innerhalb kurze Zeit wieder die gleichen Anfangsbedingungen gegeben sind, also kein Restvakuum vorhanden ist, was zu einem undefinierten und in dieser Hinsicht ungewünschten Abbremsen der nächsten Teilportion führen würde. Dies wäre insbesondere dann von Nachteil, wenn mehrere Teilportionen gleichzeitig abzulegen sind oder für eine Teilportion mehrere Pneumatikkanäle oder Vakuummündungen wirksam sind, was bei unterschiedlichen Niveaus eines jeweiligen Restvakuums ungewollt zu unterschiedlichen Bremswirkungen führen könnte, was wiederum unterschiedliche Ausrichtungen mehrerer Teilportionen untereinander oder ein ungewünschtes Verdrehen einer Teilportion mit sich bringen würde. Das Sicherstellen einer raschen Belüftung beseitigt diese potentiellen Nachteile.

Ferner kann bei manchen Ausführungsbeispielen vorgesehen sein, dass in Förderrichtung gesehen im Eingangsbereich der Produktauflage eine Bremsauflage für die auf die Produktauflage zu fördernden Teilportionen angeordnet ist. Hierdurch kann eine Vorbremsung der Teilportionen erreicht werden. Die Bremsauflage kann abnehmbar ausgebildet sein. Ein Satz unterschiedlicher, gegeneinander austauschbarer Bremsauflagen kann vorgesehen sein, um anwendungsspezifisch unterschiedliche Vorbrems-Wirkungen bereitstellen zu können. Bei der Bremsauflage kann es sich z.B. um eine an der Produktauflage anbringbare Leiste aus Metall oder Kunststoff handeln, deren als Bremsfläche dienende Auflageseite mit eine jeweils gewünschte Bremswirkung hervorrufenden Eigenschaften versehen worden ist, z.B. durch Aufbringen eines Materials beispielsweise in Form einer Beschichtung oder einer Auflage, oder durch eine z.B. mechanische Bearbeitung wie zum Beispiel eine Aufrauhung.

Die Erfindung bezieht sich ferner auf eine Produktauflage für eine Stapelvorrichtung zum Erstellen einer Lebensmittelportion, insbesondere für eine Stapelvorrichtung der hierin offenbarten Art, mit zumindest einem in der Produktauflage ausgebildeten Pneumatikkanal, welcher mit einer Einrichtung zum Erzeugen eines Druckunterschieds verbindbar ist und welcher zumindest eine Mündung in eine Auflagefläche der Produktauflage aufweist.

Insbesondere können diese Produktauflage, der zumindest eine Pneumatikkanal und/oder die zumindest eine Mündung die vorstehend im Zusammenhang mit der Stapelvorrichtung erläuterten Merkmale aufweisen. Eine solche Produktauflage kann grundsätzlich auch in herkömmlichen Stapelvorrichtungen eingesetzt werden und die Produktauflagen solcher Stapelvorrichtungen ersetzen, wobei lediglich eine Verbindung der Produktauflage bzw. deren Pneumatikkanals mit einer Einrichtung zum Erzeugen eines Druckunterschieds erforderlich ist, um das vorstehend erläuterte präzise Fördern von Teilportionen auf die Produktauflage und/oder deren präzises Ablegen zu ermöglichen. Eine Neukonstruktion der Stapelvorrichtung ist daher nicht zwangsläufig erforderlich, sondern die Produktauflage kann auch zum Nachrüsten bestehender Stapelvorrichtungen genutzt werden.

Die Produktauflage kann bei einigen Ausführungsformen durch ein 3D-Druck-Verfahren hergestellt sein. Insbesondere ermöglicht es ein solches Verfahren, den zumindest einen Pneumatikkanal und insbesondere mehrere Pneumatikkanäle, beispielsweise einen ersten Pneumatikkanal zum Verbinden mit einer Drucklufteinrichtung und einen zweiten Pneumatikkanal zum Verbinden mit einer Vakuumeinrichtung, auf einfache Weise im Inneren der Produktauflage auszubilden.

Die Erfindung betrifft zudem ein Verfahren zum Erstellen einer Lebensmittelportion mittels einer Stapelvorrichtung, insbesondere mittels einer Stapelvorrichtung der hierin offenbarten Art. Bei diesem Verfahren wird eine Teilportion entlang einer Förderrichtung zu der Stapelvorrichtung transportiert und auf eine Produktauflage der Stapelvorrichtung gefördert, wobei beim Fördern der Teilportion durch einen in der Produktauflage ausgebildeten Pneumatikkanal ein entlang einer Auflagefläche der Produktauflage gerichteter Luftstrom erzeugt und/oder Luft durch den Pneumatikkanal eingesaugt wird. Zudem wird die auf die Produktauflage geförderte Teilportion durch Wegbewegen der Produktauflage unterhalb der Produktauflage abgelegt.

Insbesondere kann bei diesem Verfahren unterhalb der Produktauflage durch sukzessives Ablegen von Teilportionen ein Stapel von Teilportionen gebildet werden, so dass die beim Ausführen des Verfahrens erstellte Lebensmittelportion durch einen solchen Stapel von Teilportionen gebildet sein kann. Wie bereits erläutert, kann durch das Erzeugen derartiger Luftströme ein präzises Fördern der Teilportion auf die Produktauflage und/oder ein präzises Ablegen der Teilportion unterhalb der Produktauflage erreicht werden, um die jeweiligen Teilportionen beispielsweise exakt aufeinanderstapeln und die Lebensmittelportion erstellen zu können. Präzises Fördern kann dabei auch bedeuten, dass die Teilportionen nicht nur gerade entlang der Förderrichtung weitergefördert, sondern bewusst beeinflusst werden, um beispielsweise die Position seitlich zu verändern oder die Teilportion zu drehen.

Bei einigen Ausführungsformen kann zum Fördern der Teilportion zunächst ein Druckluftstrom entlang der Auflagefläche erzeugt werden und daraufhin Luft an der Auflagefläche eingesaugt werden. Eine beispielsweise mittels eines Förderbandes zu der Stapelvorrichtung geführte Teilportion kann somit zunächst entlang der Auflagefläche durch einen Druckluftstrom unterstützt weiterbewegt werden, um daraufhin bei Erreichen einer gewünschten Position durch Einsaugen von Luft gebremst und exakt auf der Auflagefläche positioniert werden zu können.

Es kann bei einigen Ausführungsformen vorgesehen sein, dass eine Stärke des Druckluftstroms und/oder des Einsaugens während des Förderns der Teilportion konstant ist oder zeitlich und/oder räumlich variiert wird. Insbesondere durch Variieren des Luftstroms kann das Fördern und/oder Ablegen einer Teilportion zeitlich und/oder räumlich präzise kontrolliert und gesteuert werden.

Die Stärke des Druckluftstroms und/oder des Einsaugens kann bei einigen Ausführungsformen zeitlich und/oder räumlich in Abhängigkeit von einer Eigenschaft der Teilportion, insbesondere einem Gewicht der Teilportion, eingestellt und/oder variiert werden. Durch eine solche Einstellung oder Variation kann insbesondere eine Anpassung an bestimmte Produkte erreicht werden, indem beispielsweise die Stärke des Druckluftstroms erhöht werden kann, um eine relativ schwere Teilportion entlang der Produktauflage fördern zu können. Entsprechende Einstellungen können beispielsweise von einem Benutzer vorgebbar sein oder die Stapelvorrichtung kann einen Speicher aufweisen, in welchem entsprechende Einstellungen in Abhängigkeit von bestimmten Eigenschaften der zu verarbeitenden Teilportionen gespeichert sind. Die Eigenschaften der Teilportion, insbesondere ein Gewicht, können, beispielsweise von einer der Stapelvorrichtung vorgeschalteten Waage, an eine Steuereinrichtung der Stapelvorrichtung übermittelt werden, so dass diese automatisch die entsprechende Einstellung aus dem Speicher auslesen und die Einrichtung zum Erzeugen eines Druckunterschieds entsprechend ansteuern kann. Denkbar ist auch das Übermitteln eines zu erwartenden Gewichts durch den Slicer bzw. dessen Steuerung. Ferner können Einstellungen der Stapelvorrichtung insbesondere in Abhängigkeit von Parametern eines vorangehenden Schneidprozesses angepasst werden, um die Einstellungen der Stapelvorrichtung an sich verändernde Parameter und entsprechend veränderte Teilportionen anpassen zu können. Dazu können solche Parameter, beispielsweise eine Scheibendicke oder eine Anzahl von Scheiben einer Teilportion, von einer Steuerung eines Hochleistungsslicer an die Stapelvorrichtung und/oder deren Steuerung übermittelt werden.

Ferner kann es bei einigen Ausführungsformen vorgesehen sein, dass das Einsaugen unterbleibt, wenn eine fehlerhafte, insbesondere untergewichtige, Teilportion an die Stapelvorrichtung transportiert wird. Alternativ oder zusätzlich kann es auch vorgesehen sein, dass vor dem Ablegen der fehlerhaften Teilportion ein Ausschleusmittel unter der Produktauflage positioniert wird.

Indem das Einsaugen für eine fehlerhafte Teilportion unterbleiben kann, kann eine solche fehlerhafte Teilportion beispielsweise über die Produktauflage hinaus gefördert und einem Ausschleusabschnitt, insbesondere einem Förderband, zugeführt werden, um manuell überprüft und/oder vervollständigt werden zu können. Abgelegt werden können somit lediglich vollständige und wunschgemäße Teilportionen, so dass beispielsweise eine mittels der Stapelvorrichtung aus mehreren Teilportionen zusammengestellte Lebensmittelportion die gewünschten Eigenschaften aufweist und nicht manuell kontrolliert oder vervollständigt werden muss. Alternativ dazu kann ein solches Ausschleusen von fehlerhaften Teilportionen auch erreicht werden, indem ein Ausschleusmittel unter der Produktauflage positioniert wird, so dass die Teilportion auf dem Ausschleusmittel abgelegt werden kann. Dazu kann das Ausschleusmittel beispielsweise unter die Produktauflage geschwenkt werden, wenn eine fehlerhafte Teilportion erkannt wird. Auch eine solche fehlerhafte Teilportion kann durch Wegbewegen des Ausschleusmittels einem Ausschleusabschnitt zugeführt werden, um manuell überprüft und/oder vervollständigt zu werden. Durch ein solches Ausschleusen von fehlerhaften Teilportionen an der Stapelvorrichtung kann insbesondere auf ein Ausschleusen an vorhergehenden Verarbeitungsschritten, beispielsweise durch eine einer Aufschneidevorrichtung nachgelagerte Wippe, verzichtet werden, so dass die Länge einer Verarbeitungslinie insgesamt, welche eine Aufschneidevorrichtung, die Stapelvorrichtung und eine Verpackungsmaschine umfassen kann, reduziert werden kann.

Die Erfindung wird im Folgenden rein beispielhaft anhand eines Ausführungsbeispiels unter Bezugnahme auf die Zeichnungen erläutert.

Es zeigen:
- Fig. 1A und 1B: eine perspektivische Vorderansicht sowie eine Vorderansicht einer Stapelvorrichtung zum Erstellen von Lebensmittelportionen mit einer ersten und einer zweiten Produktauflage in einer Zuführstellung, in welcher eine Teilportion auf eine von der ersten Produktauflage und der zweiten Produktauflage gebildete Auflagefläche förderbar ist,
- Fig. 2A und 2B: eine perspektivische Vorderansicht und eine Vorderansicht der Stapelvorrichtung, wobei die Produktauflagen in eine Ablegestellung bewegt sind, in welcher eine auf die Produktauflagen geförderte Teilportion unterhalb der Produktauflage ablegbar ist,
- Fig. 3: eine Rückansicht der Stapelvorrichtung,
- Fig. 4A bis 4D: eine Draufsicht auf die erste Produktauflage, eine Draufsicht auf die erste Produktauflage mit transparenter Oberseite, eine Querschnittsdarstellung der ersten Produktauflage und eine Unteransicht der ersten Produktauflage,
- Fig. 5: eine Längsschnittdarstellung der ersten Produktauflage, und
- Fig. 6: eine Ansicht entsprechend Fig. 1A (Ausschnitt) einer weiteren Ausführungsform.

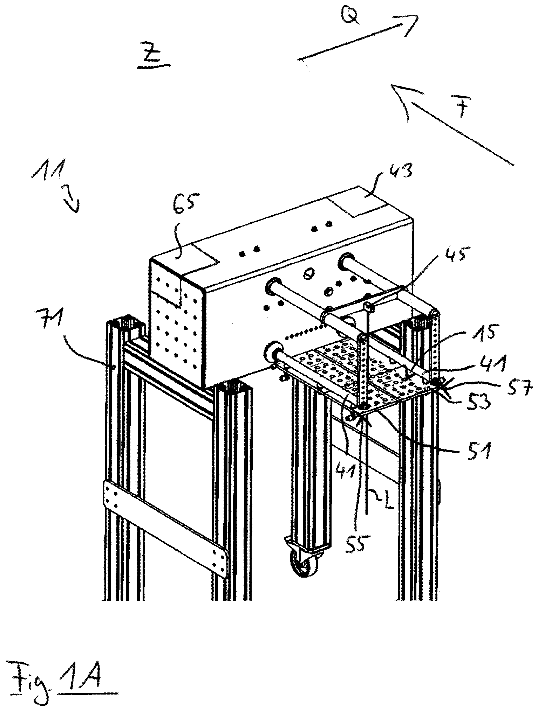

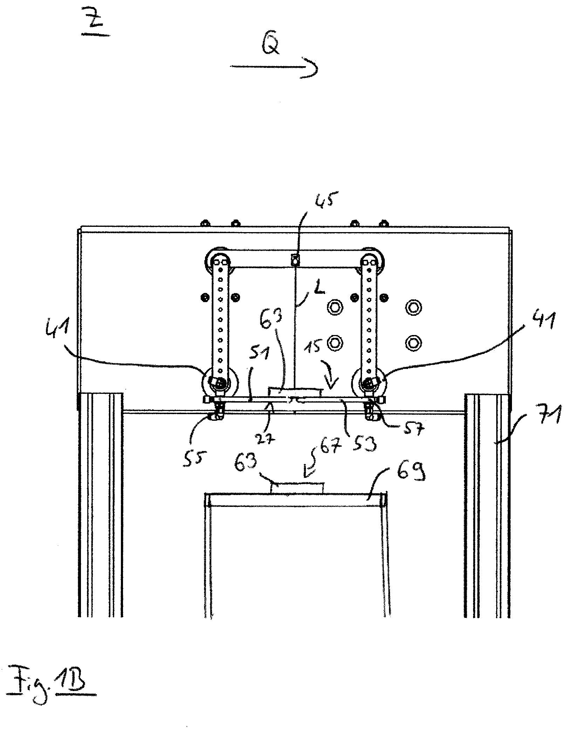

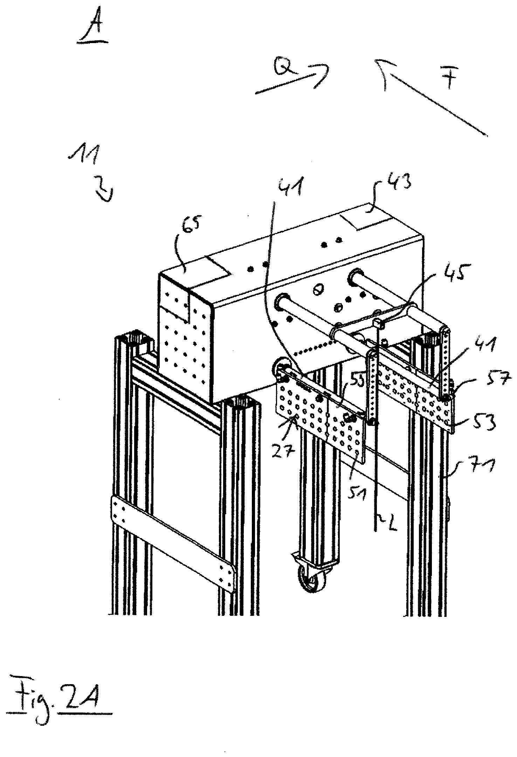

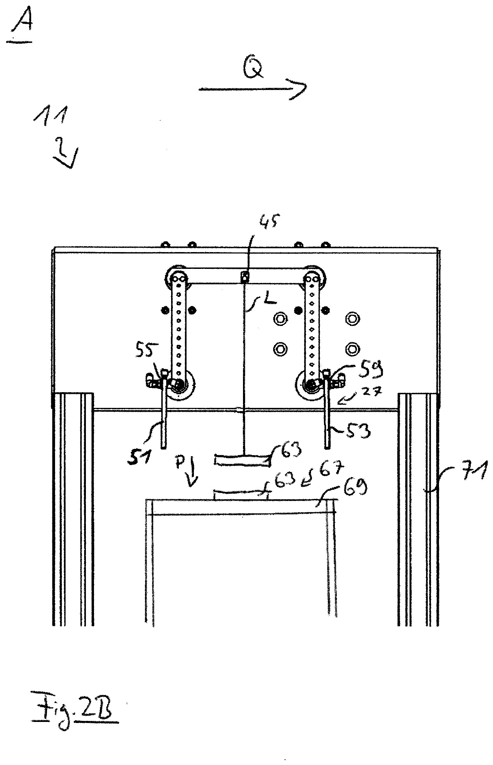

Die Fig. 1A bis 2B zeigen eine Stapelvorrichtung 11 zum Erstellen einer Lebensmittelportion 67, welche eine erste Produktauflage 51 und eine zweite Produktauflage 53 umfasst, die zwischen einer in den Fig. 1A und 1B gezeigten Zuführstellung Z und einer in den Fig. 2A und 2B gezeigten Ablegestellung A bewegbar sind. In der Zuführstellung Z sind die Produktauflagen 51 und 53 parallel zu einer Förderrichtung F ausgerichtet, so dass bei sich in der Zuführstellung Z befindenden Produktauflagen 51 und 53 eine Teilportion 63 entlang der Förderrichtung F auf eine von den Produktauflagen 51 und 53 gebildete Auflagefläche 15 förderbar ist (vgl. insbesondere Fig. 1B). Dies kann beispielsweise mittels eines nicht gezeigten, der Stapelvorrichtung 11 entgegen der Förderrichtung F vorgeschalteten Förderbandes erfolgen. Durch Bewegen der Produktauflagen 51 und 53 in die Ablegestellung A kann die auf die Produktauflagen 51 und 53 geförderte Teilportion 63 hingegen, wie Fig. 2B zeigt, unterhalb der Produktauflagen 51 und 53 abgelegt werden, wobei die Teilportion 63 nach dem Bewegen der Produktauflagen 51 und 53 entlang eines Pfeils P herabfällt.

Die Stapelvorrichtung 11 weist ferner ein Gestell 71 auf, mittels dessen die Produktauflagen 51 und 53 gehalten und über einem Transportband 69 positioniert sind. Dadurch können die Teilportionen 63 auf dem Transportband 69 abgelegt und darauf gestapelt werden, um eine vollständige Lebensmittelportion 67 zu erstellen. Die vollständige Lebensmittelportion 67, insbesondere ein Stapel mehrerer Teilportionen 63, kann sodann mittels des Transportbands 69 weiteren Verarbeitungsschritten und beispielsweise einer Verpackungsmaschine zugeführt werden.

Um die Bewegung der Produktauflagen 51 und 53 zwischen der Zuführstellung Z und der Ablegestellung A zu ermöglichen, sind die Produktauflagen 51 und 53 an ihren Außenseiten 55 bzw. 57 mit einer jeweiligen Welle 41 verbunden, so dass die Produktauflagen 51 und 53 durch gegensinniges Drehen der Wellen 41 um 90 Grad aus der Zuführstellung Z in die Ablegestellung A überführt werden können (vgl. Fig. 1A bis 2B). Um die Produktauflagen 51 und 53 wieder in die Zuführstellung Z zu überführen, kann die Drehrichtung der Wellen 41 beispielsweise veränderbar sein und die Produktauflagen 51 und 53 können wiederum durch eine Drehung der Wellen 41 um 90 Grad in die Zuführstellung Z bewegt werden. Es kann jedoch auch vorgesehen sein, dass die Drehrichtung der Wellen 41 nicht veränderbar ist und/oder verändert wird, so dass die Produktauflagen 51 und 53 durch Weiterdrehen der Wellen 41 um 270 Grad von der Ablegestellung A zurück in die Zuführstellung Z überführt werden können, um eine nachfolgende Teilportion 63 aufzunehmen. Ferner können an den Wellen 41 grundsätzlich auch mehrere und beispielsweise vier um je 90 Grad zueinander versetzte Produktauflagen befestigt sein, so dass durch Bewegen einer Produktauflage aus der Zuführstellung Z in die Ablegestellung A automatisch eine entgegen der Drehrichtung folgende Produktauflage in die Zuführstellung Z gelangen kann.

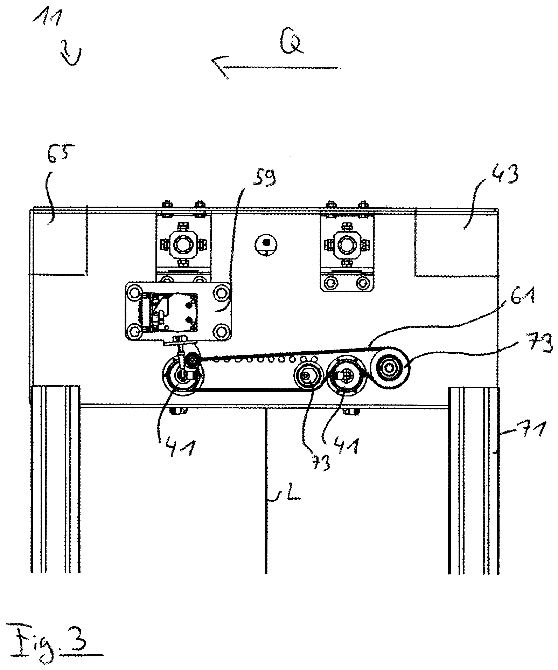

Zum Antreiben der Wellen 41 ist, wie Fig. 3 zeigt, an einer Rückseite der Stapelvorrichtung 11 ein gemeinsamer Motor 59 vorgesehen, welcher mit den Wellen 41 über einen Riemen 61 verbunden ist. Der Riemen 61 verläuft über zwei Umlenkrollen 73 und ist dadurch derart um die Wellen 41 geführt, dass diese mittels des gemeinsamen Motors 59 in eine zueinander gegensinnige Rotation versetzt werden können.

Insbesondere kann der Motor 59 ferner über eine nicht gezeigte Reibkupplung mit der Welle 41 verbunden sein, um das auf die Welle 41 übertragbare Drehmoment zu begrenzen. Dadurch kann erreicht werden, dass die Wellen 41 angehalten werden, wenn ein Benutzer während des Betriebs in die Stapelvorrichtung 11 eingreift und die Produktauflage 51 oder 53 blockiert, so dass eine Verletzung des Benutzers verhindert werden kann. Durch die Verbindung der Wellen 41 über den Riemen 61 kann auch die Übertragung von Drehmoment auf die Wellen 41 synchron unterbrochen werden, wenn eine der Produktauflagen 51 und 53 blockiert ist, so dass die Wellen 41 bzw. die Produktauflagen 51 und 53 nach Beendigung der Unterbrechung in zueinander synchroner Drehstellung weiterbewegt werden können.

Eine derartige Stapelvorrichtung 11 kann insbesondere als Teil einer Verarbeitungslinie vorgesehen sein, um eine Lebensmittelportion 67 aus mehreren zuvor erstellten Teilportionen 63 zusammenzustellen, welche daraufhin beispielsweise an eine Verpackungsmaschine zum gemeinsamen Verpacken der Lebensmittelportion übergeben werden kann. Beispielsweise kann ein solches Vorgehen bei Teilportionen 63 vorgesehen sein, die von einer Aufschneidemaschine für Lebensmittelprodukte erstellt wurden und mehrere Scheiben eines Fleisch- oder Käseprodukts umfassen, wobei etwa als Angebot für Großabnehmer aus der Gastronomie Lebensmittelportionen 67 mit mehreren derartigen Teilportionen 63 gemeinsam verpackt werden können. Um die einzelnen Teilportionen 63 wieder voneinander trennen und aus der Packung entnehmen zu können, kann bei solchen Produkten mittels einer Aufschneidemaschine unter jeder Teilportion 63 zudem ein sogenannter Underleaver - ein Papier oder eine Folie - angeordnet werden.

Ein Problem bei solchen Stapelvorrichtungen 11 besteht häufig darin, dass die Teilportionen 63 möglichst exakt auf der Auflagefläche 15 positioniert und möglichst präzise abgelegt werden müssen, um eine wunschgemäße Lebensmittelportion 67 erstellen zu können. Bei herkömmlichen Stapelvorrichtungen 11 werden die Teilportionen 63 jedoch meist lediglich mittels eines vorgeschalteten und in den Figuren nicht gezeigten Förderbandes an die Stapelvorrichtung 11 übergeben und gewissermaßen auf die Produktauflagen 51 und 53 aufgeschoben, wobei es aufgrund der Reibung zwischen den Produktauflagen 51 und 53 zu ungewollten Auslenkungen der Teilportion 63 und fehlerhaften Positionierungen kommen kann, so dass die Teilportionen 63 beispielsweise nicht exakt aufeinander gestapelt werden können.

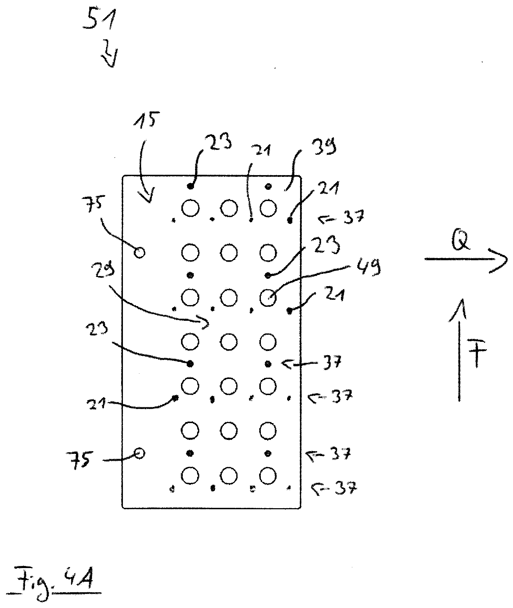

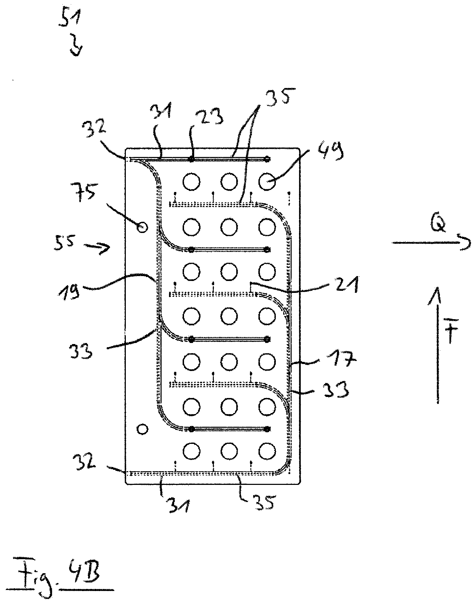

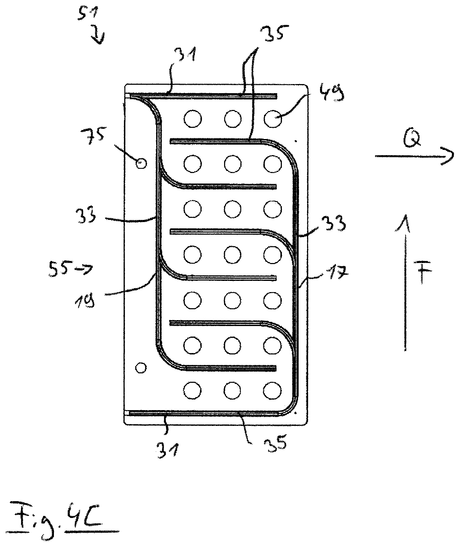

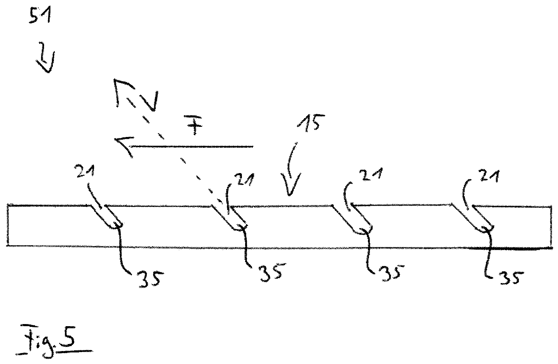

Um diesem Problem zu begegnen, sind in den Produktauflagen 51 und 53 der hier gezeigten Stapelvorrichtung 11 ein jeweiliger erster Pneumatikkanal 17 und ein jeweiliger zweiter Pneumatikkanal 19 ausgebildet, wobei die Pneumatikkanäle 17 und 19 mit einer Einrichtung 65 zum Erzeugen eines Druckunterschieds verbindbar sind (vgl. insbesondere Fig. 4B, 4C und 5). Der jeweilige erste Pneumatikkanal 17 weist mehrere Druckluftmündungen 21 in die Auflagefläche 15 auf und der jeweilige zweite Pneumatikkanal 19 weist mehrere Vakuummündungen 23 in die Auflagefläche 15 auf (vgl. Fig. 4A, 4B, 4C und 5). Die Ausbildung der Produktauflagen 51 und 53 wird im Folgenden beispielhaft anhand der Fig. 4A bis 5 für die erste Produktauflage 51 näher erläutert.

Wie Fig. 4A zeigt, sind die in die Auflagefläche 15 führenden Druckluftmündungen 21 in mehreren entlang der Förderrichtung F parallel zueinander versetzten Reihen 37 angeordnet, wobei sich die Reihen 37 entlang einer senkrecht zu der Förderrichtung F ausgerichteten Querrichtung Q erstrecken. In jeder der Reihen 37 sind beispielhaft vier Druckluftmündungen 21 angeordnet, so dass in jeder der Reihen 37 vier entlang der Querrichtung Q zueinander versetzte Druckluftmündungen 21 in die Auflagefläche 15 führen.

Ferner sind auch die mehreren Vakuummündungen 23 in die Auflagefläche 15 in mehreren, parallel zueinander ausgerichteten und sich entlang der Querrichtung Q erstreckenden Reihen 37 angeordnet, wobei jede der Reihen 37 von Vakuummündungen 23 zwei Vakuummündungen 23 aufweist. Insofern umfasst die hier gezeigte Produktauflage 51 doppelt so viele Druckluftmündungen 21 wie Vakuummündungen 23. Die Druckluftmündungen 21 und die Vakuummündungen 23 sind kreisförmig ausgebildet, wobei die Vakuummündungen 23 eine größere Querschnittsfläche als die Druckluftmündungen 21 aufweisen. Alternativ dazu können die Druckluftmündungen 21 und/oder die Vakuummündungen 23 jedoch auch eine andere Querschnittsform aufweisen, beispielsweise elliptisch, rechteckig oder quadratisch. Zudem können die Druckluftmündungen 21 und die Vakuummündungen 23 grundsätzlich auch eine gleiche Querschnittsfläche und/oder eine sich voneinander unterscheidende Querschnittsform aufweisen.

Die Fig. 4B und 4C zeigen den im Inneren der Produktauflage 51 ausgebildeten ersten Pneumatikkanal 17 und den im Inneren der Produktauflage 51 ausgebildeten zweiten Pneumatikkanal 19. Sowohl der erste Pneumatikkanal 17 als auch der zweite Pneumatikkanal 19 weisen einen jeweiligen Anschluss 32 auf, um mit der Einrichtung 65 zum Erzeugen eines Druckunterschieds verbunden werden zu können. Die Anschlüsse 32 sind an einer der Welle 41 zugewandten Außenseite 55 der Produktauflage 51 angeordnet, so dass die Pneumatikkanäle 17 und 19 durch jeweilige - in den Figuren nicht gezeigte - innerhalb der Wellen 41 verlaufende Pneumatikleitungen mit der Einrichtung 65 zum Erzeugen eines Druckunterschieds verbunden werden können.

Ferner bilden die Anschlüsse 32 ein Ende eines jeweiligen Anschlussabschnitts 31 des Pneumatikkanals 17 bzw. 19, welcher sich entlang der Querrichtung Q erstreckt und mit einem parallel zu der Förderrichtung F ausgerichteten Versorgungsabschnitt 33 verbunden ist. Von den Versorgungsabschnitten 33 zweigen jeweilige Arbeitsabschnitte 35 ab, welche parallel zueinander und senkrecht zu der Förderrichtung F ausgerichtet sind. Jeder der Arbeitsabschnitte 35 führt zu einer jeweiligen Reihe 37 von Druckluftmündungen 21 bzw. Vakuummündungen 23, so dass die Druckluftmündungen 21 und die Vakuummündungen 23 über den jeweiligen Pneumatikkanal 17 bzw. 19 mit der Einrichtung 65 zum Erzeugen eines Druckunterschieds verbunden werden können. Ferner ist der Anschlussabschnitt 31 des ersten Pneumatikkanals 17 ebenfalls mit einer Reihe 37 von Druckluftmündungen 21 und der Anschlussabschnitt 31 des zweiten Pneumatikkanals 19 mit einer Reihe 37 von Vakuummündungen 23 verbunden, so dass die Anschlussabschnitte 31 bei der gezeigten Ausführungsform auch als Arbeitsabschnitte 35 fungieren.

Wie aus Fig. 4B ferner hervorgeht, befinden sich die Vakuummündungen 23 senkrecht zu der Auflagefläche 15 in Flucht zu dem jeweiligen zugeordneten Arbeitsabschnitt 35 des zweiten Pneumatikkanals 19, so dass auch die Vakuummündungen 23 senkrecht zu der Auflagefläche 15 ausgerichtet sind. Hingegen sind Ausgänge der Druckluftmündungen 21 entlang der Förderrichtung F versetzt zu den jeweiligen zugeordneten Arbeitsabschnitten 35 angeordnet, so dass die Druckluftmündungen 21 geneigt zu der Förderrichtung F ausgerichtet sind. Bei einer solchen Ausrichtung der Druckluftmündungen 21 schneidet, wie Fig. 5 zeigt, eine geradlinige Verlängerung V der Druckluftmündungen 21 die Förderrichtung F in einem spitzen Winkel, so dass ein aus den Druckluftmündungen 21 austretender Luftstrom eine Komponente in Richtung der Förderrichtung F aufweist. Wie nachstehend noch näher erläutert ist, kann durch einen solchen Luftstrom insbesondere das Fördern der Teilportion 63 auf die Produktauflage 51 unterstützt werden.

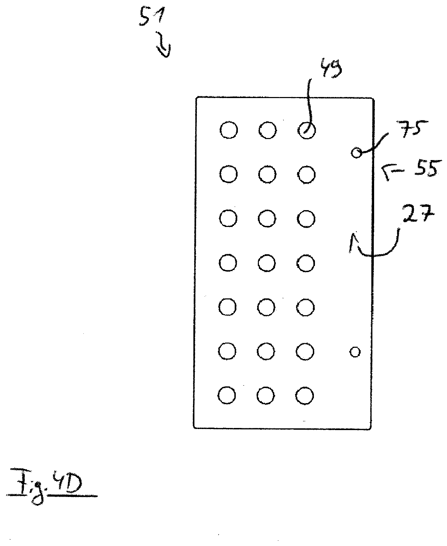

Wie sich insbesondere aus der Darstellung der Fig. 4D ergibt, welche eine Unterseite 27 der Produktauflage 51 zeigt, erstrecken sich die Pneumatikkanäle 17 und 19 vollständig im Inneren der Produktauflage 51 - zwischen der Auflagefläche 15 und der Unterseite 27 - von dem Anschluss 32 zu den Druckluftmündungen 21 bzw. den Vakuummündungen 23. Um eine solche Ausbildung der Produktauflage 51 mit im Inneren verlaufenden Pneumatikkanälen 17 und 19 zu erreichen, kann die Produktauflage 51 insbesondere durch ein 3D-Druck-Verfahren hergestellt sein. Mittels eines solchen 3D-Druck-Verfahrens kann auf einfache Weise eine grundsätzlich beliebige Anzahl von Pneumatikkanälen im Inneren einer Produktauflage 51 ausgebildet werden, wobei auch deren Verlauf durch ein entsprechendes Anpassen des dem Verfahren zugrunde liegenden Modells beliebig verändert werden kann. Beispielsweise kann es vorgesehen sein, die jeweiligen Versorgungsabschnitte 33 in der Mitte der Produktauflage 51 zu führen, wobei die Arbeitsabschnitte 35 bei einer solchen Ausbildung beispielsweise beidseitig von den Versorgungsabschnitten 33 abzweigen können. Zudem können Produktauflagen mit mehr als zwei im Inneren verlaufenden Pneumatikkanälen ausgebildet werden.

Darüber hinaus sind die Produktauflagen 51 und 53 mit durchgehenden Löchern 49 ausgebildet, wodurch die Reibung zwischen den Produktauflagen 51 und 53 und den Teilportionen 63 während des Ablegens reduziert werden kann. An den Außenseiten 55 und 57 der Produktauflagen 51 bzw. 53 sind zudem jeweilige Öffnungen 75 ausgebildet, durch welche die Produktauflagen 51 und 53 mit der jeweiligen Welle 41 verbindbar und insbesondere auf die Wellen 41 aufsteckbar sind (vgl. Fig. 4A bis 4D). Dies kann ein werkzeugloses Verbinden der Produktauflagen 51 und 53 mit den Wellen 41 sowie ein werkzeugloses Entnehmen der Produktauflagen 51 und 53 ermöglichen, um diese beispielsweise für einen Reinigungsprozess schnell und unkompliziert entnehmen und nach dem Reinigen wieder an den Wellen 41 montieren zu können.

Die im Inneren der Produktauflagen 51 und 53 verlaufenden und mit mehreren Druckluftmündungen 21 bzw. Vakuummündungen 23 in die Auflagefläche 15 mündenden Pneumatikkanäle 17 und 19 ermöglichen es insbesondere, die Teilportionen 63 präzise auf die Auflagefläche 15 zu fördern und/oder in einer gewünschten Position auf der Auflagefläche 15 anzuhalten. Ferner kann das Ablegen der Teilportionen 63 durch entsprechendes Ansteuern der Einrichtung 65 zum Erzeugen eines Druckunterschieds unterstützt werden.

Beispielsweise kann es vorgesehen sein, während eines Förderns einer Teilportion 63 auf die Produktauflagen 51 und 53 zunächst mittels der Einrichtung 65 zum Erzeugen eines Druckunterschieds einen Druckluftstrom in dem ersten Pneumatikkanal 17 zu erzeugen, so dass Druckluft aus den Druckluftmündungen 21 der Auflagefläche 15 austritt und ein Luftkissen für die auf die Produktauflagen 51 und 53 geförderte Teilportion 63 bildet, um das Fördern der Teilportion 63 zu unterstützen. Um ein möglichst exaktes Positionieren einer Teilportion 63 auf der Auflagefläche 15 zu erreichen, kann ferner durch Erzeugen eines Vakuums in dem zweiten Pneumatikkanal 19 und ein Einsaugen von Luft durch die Vakuummündungen 23 eine Bremswirkung entfaltet werden, um eine auf die Auflagefläche 15 geförderte Teilportion 63 abzubremsen und zu positionieren. Auch während eines Ablegens einer Teilportion 63 kann beispielsweise durch Erzeugen eines Druckluftstroms in dem ersten Pneumatikkanal 17 eine Reibung zwischen der Teilportion 63 und den Produktauflagen 51 und 53 reduziert werden, um etwa ein Verrutschen der Teilportion 63 während des Ablegens zu verhindern.

Während des Förderns der Teilportionen 63 auf die Produktauflagen 51 und 53 kann somit insbesondere zunächst der erste Pneumatikkanal 17 mit Druckluft beaufschlagt werden, woraufhin durch den zweiten Pneumatikkanal 19 Luft angesaugt und die Teilportion 63 abgebremst werden kann. Um eine solche Steuerung zu ermöglichen, weist die Stapelvorrichtung 11 eine Steuereinrichtung 43 auf, welche dazu ausgebildet ist, die Einrichtung 65 zum Erzeugen eines Druckunterschieds zu steuern. Die Steuereinrichtung 43 kann auch dazu ausgebildet sein, den in dem ersten Pneumatikkanal 17 und/oder dem zweiten Pneumatikkanal 19 erzeugten Luftstrom und insbesondere dessen Stärke zeitlich zu variieren. Zudem kann die Steuereinrichtung 43 dazu ausgebildet sein, eine Stärke des jeweiligen Luftstroms in Abhängigkeit von einer Eigenschaft der Teilportion 63, insbesondere deren Gewicht, anzupassen.

Ferner weist Stapelvorrichtung 11 eine Messeinrichtung 45 auf, welche hier als eine Lichtschranke ausgebildet ist und einen Lichtstrahl L aussendet. Die Messeinrichtung 45 ist oberhalb der Auflagefläche 15 und in deren Mitte angeordnet, so dass mittels der Messeinrichtung 45 erfasst werden kann, wenn eine Teilportion 63 bis zu der Mitte der Auflagefläche 15 gefördert ist. Die Steuereinrichtung 43 kann beispielsweise dazu ausgebildet sein, infolge eines Signals der Messeinrichtung 45, welches das Erreichen der Mitte der Auflagefläche 15 durch eine Teilportion 63 anzeigt, anstelle einer Druckluftströmung in dem ersten Pneumatikkanal 17 Luft von der Auflagefläche 15 durch den zweiten Pneumatikkanal 19 anzusaugen, so dass anstelle der durch Beaufschlagen des ersten Pneumatikkanals 17 mit Druckluft zu erreichenden Förderwirkung ein Abbremsen und Positionieren der Teilportion 63 erfolgen kann. Zudem kann die Stapelvorrichtung 11 grundsätzlich auch mehrere Messeinrichtungen 45 aufweisen, um die Position einer Teilportion 63 auf der Auflagefläche 15 exakt bestimmen und die Einrichtung 65 zum Erzeugen eines Druckunterschieds präzise in Abhängigkeit von dieser Position ansteuern zu können.

Es kann ferner vorgesehen sein, dass die Steuereinrichtung 43 dazu ausgebildet ist, die Einrichtung 65 zum Erzeugen eines Druckunterschieds zum Beaufschlagen des ersten Pneumatikkanals 17 mit Druckluft anzusteuern, jedoch das nachfolgende Ansaugen von Luft durch den zweiten Pneumatikkanal 19 auszusetzen, wenn eine fehlerhafte und beispielsweise untergewichtige Teilportion 63 an die Stapelvorrichtung 11 gefördert wird. Insbesondere können die Produktauflagen 51 und 53 und/oder die Wellen 41 dazu gegenüber der in den Fig. 1A bis 3 gezeigten Position nach unten versetzt an der Stapelvorrichtung 11 angeordnet werden, so dass eine solche fehlerhafte Teilportion 63 über die Auflagefläche 15 in Förderrichtung F hinaus bewegt und beispielsweise einem dahinter angeordneten, in den Figuren nicht gezeigten Förderband zugeführt werden kann, welches die Teilportion 63 zu einem Ausschleusabschnitt führt. Dort kann die Teilportion 63 beispielsweise überprüft und/oder manuell vervollständigt werden. Alternativ dazu kann auch ein Ausschleusmittel unter die Produktauflagen 51 und 53 bewegbar und beispielsweise einschwenkbar sein, um eine fehlerhafte Teilportion 63 auffangen und einem Ausschleusabschnitt zuführen zu können.

Bei der anhand der Figuren veranschaulichten Ausführungsform ist die Einrichtung 65 zum Erzeugen eines Druckunterschieds beispielhaft als Teil der Stapelvorrichtung 11 gezeigt. Es kann jedoch auch vorgesehen sein, dass die Stapelvorrichtung 11 und/oder die Produktauflagen 51 und 53 mit einer solchen Einrichtung 65 zum Erzeugen eines Druckunterschieds wahlweise verbindbar sind. Ferner kann es vorgesehen sein, dass die Einrichtung 65 zum Erzeugen eines Druckunterschieds sowohl dazu ausgebildet ist, den ersten Pneumatikkanal 17 mit einer Druckluftströmung zu beaufschlagen, als auch dazu, durch die Vakuummündungen 23 Luft durch den zweiten Pneumatikkanal 19 einzusaugen. Alternativ dazu können jedoch auch eine separate Drucklufteinrichtung und eine separate Vakuumeinrichtung vorgesehen sein, um die entsprechenden Luftströmungen an der Auflagefläche 15 erzeugen zu können.

Ferner sind bei der gezeigten Ausführungsform die Druckluftmündungen 21 und die Vakuummündungen 23 gleichmäßig an der Auflagefläche 15 verteilt angeordnet. Es kann jedoch auch vorgesehen sein, dass beispielsweise mehr Druckluftmündungen 21 in einem jeweiligen der Außenseite 55 bzw. 57 der Produktauflagen 51 bzw. 53 zugewandten Randabschnitt angeordnet sind, wobei die Druckluftmündungen 21 in diesem Fall insbesondere auch in Richtung der jeweiligen entgegengesetzten Innenseite der Produktauflagen 51 und 53 ausgerichtet sein können. Eine solche Ausrichtung und Anordnung der Druckluftmündungen 21 kann es insbesondere ermöglichen, die Teilportionen 63 auf der Auflagefläche 15 zu zentrieren. Ferner kann es vorgesehen sein, eine höhere Dichte von Druckluftmündungen 21 in einem Bereich anzuordnen, an welchem die Teilportionen 63 von einer vorgelagerten Einrichtung oder einem Förderband übernommen werden, um in diesem Bereich das Fördern der Teilportionen 63 entlang der Produktauflagen 51 und 53 gezielt zu unterstützen.

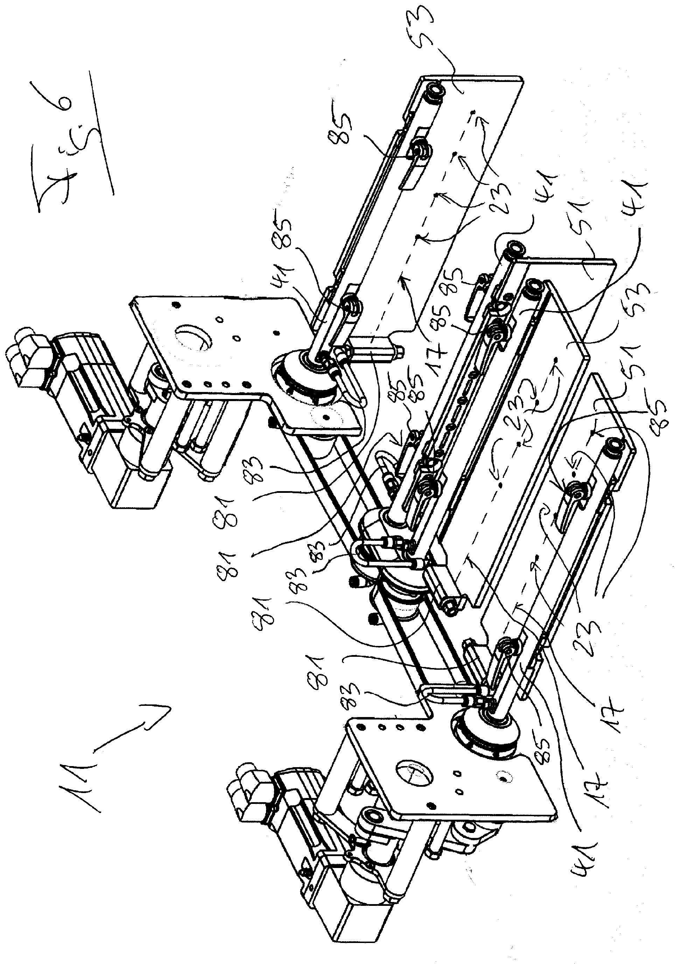

Das Ausführungsbeispiel der Fig. 6 zeigt unter anderem, dass die Stapelvorrichtung 11 auch zweispurig ausgebildet sein kann, wobei sich in dem hier gezeigten Zustand die Produktauflagen 51, 53 der linken Spur in der Zuführstellung und die Produktauflagen 51, 53 der rechten Spur in der Ablagestellung befinden.

In diesem Ausführungsbeispiel erfolgt jeweils nur eine Abbremsung der Teilportionen durch Beaufschlagung von mehreren, hier jeweils vier in einer mittigen Reihe angeordneten Vakuummündungen 23 mit Unterdruck über einen hier gestrichelt angedeuteten Pneumatikkanal 17, der an einen jeweiligen Vakuum-Erzeuger 81 angeschlossen ist, der wiederum über einen Druckluftschlauch 83 an die jeweilige Welle 41 angeschlossen ist, die mit einer Druckluftquelle (z.B. der Einrichtung 65 gemäß dem zuvor beschriebenen Ausführungsbeispiel; hier nicht dargestellt) verbunden ist.

Bei dem Vakuum-Erzeuger 81 kann es sich z.B. um einen Vakuum-Ejektor handeln, wie er an anderer Stelle dieser Offenbarung beschrieben worden ist und der eine oder mehrere Venturi-Düsen aufweist, mittels welcher aus der zugeführten Druckluft ein Unterdruck im Pneumatikkanal 17 erzeugt und so durch die Vakuummündungen 23 Luft angesaugt wird.

Die Vakuum-Erzeuger 81 sind jeweils derart kompakt ausgebildet, dass sie auf der jeweiligen Produktauflage 51, 53 angebracht und mit ihrem nach unten weisenden Vakuumanschluss direkt an eine zum Pneumatikkanal 17 führende oder den Anfang des Pneumatikkanals 17 bildende Saugöffnung angeschlossen werden können.

Eine solche dezentrale Vor-Ort-Vakuumerzeugung unmittelbar an der jeweiligen Produktauflage 51, 53 benötigt wenig Bauraum und macht lange Vakuumleitungen sowie leistungsstarke Zentral-Vakuumquellen z.B. in Form teurer Vakuumpumpen überflüssig, wobei außerdem Energie gespart wird, da Leistungsverluste aufgrund langer Saugwege vermieden werden. Zudem kann eine Anpassung an die jeweiligen baulichen Gegebenheiten auf einfache Weise erfolgen, da die Vakuum-Erzeuger 81 auch an einer anderen Stelle einer jeweiligen Produktauflage 51, 53 angebracht werden können, wenn die dem jeweiligen Pneumatikkanal 17 zugeordnete Saugöffnung entsprechend positioniert ist. Der Anschluss eines Vakuum-Erzeugers 81 an die Saugöffnung des Pneumatikkanals 17 muss aber nicht direkt, sondern kann alternativ über eine Vakuumleitung wie z.B. einen flexiblen Schlauch erfolgen.

Ein Vakuum-Erzeuger 81 muss nicht unmittelbar an einer jeweiligen Produktauflage 51, 53 angebracht, sondern kann auch an einer anderen Stelle der Stapelvorrichtung 11 positioniert werden, bevorzugt in der Nähe der jeweiligen Produktauflage 51, 53, so dass nur eine relativ kurze Vakuumleitung erforderlich ist. Hierfür schafft die dezentrale Vakuumerzeugung mittels der einzelnen Vakuum-Erzeuger 81 ein hohes Maß an Flexibilität.

Um die Produktauflagen 51, 53 werkzeuglos an der jeweiligen Welle 41 montieren zu können, sind jeweils zwei Schnellspanner 85 vorgesehen.

### Bezugszeichenliste

- 11: Stapelvorrichtung
- 15: Auflagefläche
- 17: erster Pneumatikkanal
- 19: zweiter Pneumatikkanal
- 21: Druckluftmündung
- 23: Vakuummündung
- 27: Unterseite
- 31: Anschlussabschnitt
- 32: Anschluss
- 33: Versorgungsabschnitt
- 35: Arbeitsabschnitt
- 37: Reihe
- 41: Welle
- 43: Steuereinrichtung
- 45: Messeinrichtung
- 49: Loch
- 51: erste Produktauflage
- 53: zweite Produktauflage
- 55: Außenseite
- 57: Außenseite
- 59: Motor
- 61: Riemen
- 63: Teilportion
- 65: Einrichtung zum Erzeugen eines Druckunterschieds
- 67: Lebensmittelportion
- 69: Transportband
- 71: Gestell
- 73: Umlenkrolle
- 75: Öffnung
- 81: Vakuum-Erzeuger
- 83: Druckluftschlauch
- 85: Schnellspanner

- A: Ablegestellung
- F: Förderrichtung
- L: Lichtstrahl
- P: Pfeil
- Q: Querrichtung
- V: Verlängerung
- Z: Zuführstellung

## Patentansprüche

1. Stapelvorrichtung (11) zum Erstellen von Lebensmittelportionen (67),
umfassend zumindest eine zwischen einer Zuführstellung (Z) und einer Ablegestellung (A) bewegbare Produktauflage (51, 53),
wobei in der Zuführstellung (Z) der Produktauflage (51, 53) eine Teilportion (63) der zu erstellenden Lebensmittelportion (67) entlang einer Förderrichtung (F) auf eine Auflagefläche (15) der Produktauflage (51, 53) förderbar ist und wobei die Stapelvorrichtung (11) dazu ausgebildet ist, die auf die Produktauflage (51, 53) geförderte Teilportion (63) durch Bewegen der Produktauflage (51, 53) in die Ablegestellung (A) unterhalb der Produktauflage (51, 53) abzulegen, insbesondere auf einer zuvor abgelegten Teilportion (63) zu stapeln, und
wobei in der Produktauflage (51, 53) zumindest ein mit einer Einrichtung (65) zum Erzeugen eines Druckunterschieds verbindbarer Pneumatikkanal (17, 19) ausgebildet ist, welcher zumindest eine Mündung (21, 23) in die Auflagefläche (15) aufweist.

2. Stapelvorrichtung (11) nach Anspruch 1,
wobei der Pneumatikkanal (17, 19) einen Anschluss (32) für die Einrichtung (65) zum Erzeugen eines Druckunterschieds an die Produktauflage (51, 53) aufweist und sich ausgehend von dem Anschluss (32) im Inneren der Produktauflage (51, 53), zwischen der Auflagefläche (15) und einer der Auflagefläche (15) entgegengesetzten Unterseite (27) der Produktauflage (51, 53), zu der zumindest einen Mündung (21, 23) erstreckt.

3. Stapelvorrichtung (11) nach Anspruch 1 oder 2,
wobei die Mündung (21, 23) des Pneumatikkanals (17, 19) geneigt zu der Auflagefläche (15) ausgerichtet ist; und/oder
wobei die Mündung (21, 23) des Pneumatikkanals (17, 19) in Richtung eines mittigen Abschnitts der Auflagefläche (15) ausgerichtet ist; und/oder
wobei die Mündung (21, 23) des Pneumatikkanals (17, 19) in einem spitzen Winkel zu der Auflagefläche (15) ausgerichtet ist, insbesondere in einem Winkel zwischen 5 Grad und 30 Grad, bevorzugt in einem Winkel zwischen 10 Grad und 20 Grad und/oder in einem Winkel von 15 Grad; und/oder
wobei eine geradlinige Verlängerung (V) der Mündung (21, 23) des Pneumatikkanals (17, 19) aus der Auflagefläche (15) heraus in der Zuführstellung (Z) der Produktauflage (51, 53) einen spitzen Winkel zu der Förderrichtung (F) einnimmt, insbesondere einen Winkel zwischen 5 Grad und 30 Grad, bevorzugt einen Winkel zwischen 10 Grad und 20 Grad und/oder einen Winkel von 15 Grad; und/oder
wobei die Mündung (21, 23) als flache Senkung, als flacher Trichter oder als eine Mulde ausgebildet ist und/oder in eine an der Auflagefläche (15) ausgebildete flache Rille übergeht.

4. Stapelvorrichtung (11) nach einem der vorhergehenden Ansprüche,
wobei der Pneumatikkanal (17, 19) mehrere Mündungen (21, 23) in die Auflagefläche (15) aufweist,
insbesondere wobei die Mündungen (21, 23) in einer zu der Auflagefläche (15) parallelen Ebene eine gleiche oder eine unterschiedliche Querschnittsfläche aufweisen; und/oder insbesondere wobei die Mündungen (21, 23) in einer zu der Auflagefläche (15) parallelen Ebene eine gleiche oder eine unterschiedliche Querschnittsform aufweisen; und/oder insbesondere wobei die Mündungen (21, 23) entlang der Förderrichtung (F) und/oder quer zu der Förderrichtung (F) versetzt zueinander angeordnet sind; und/oder insbesondere wobei die Mündungen (21, 23) in mehreren, insbesondere in zwei, drei, vier, fünf oder sechs, quer zu der Förderrichtung (F) ausgerichteten Reihen (37) angeordnet sind.

5. Stapelvorrichtung (11) nach Anspruch 4,
wobei der Pneumatikkanal (17, 19) einen Anschlussabschnitt (31) zum Verbinden des Pneumatikkanals (17, 19) mit der Einrichtung (65) zum Erzeugen eines Druckunterschieds, einen Versorgungsabschnitt (33) und mehrere von dem Versorgungsabschnitt (33) abzweigende Arbeitsabschnitte (35) aufweist,
wobei der Versorgungsabschnitt (33) den Anschlussabschnitt (31) bildet oder in den Anschlussabschnitt (31) übergeht, und
wobei jeder der Arbeitsabschnitte (35) zu zumindest einer jeweiligen Mündung (21, 23) in die Auflagefläche (15) führt;
insbesondere wobei der Versorgungsabschnitt (33) parallel zu der Förderrichtung (F) ausgerichtet ist und wobei die Arbeitsabschnitte (35) parallel zueinander und/oder senkrecht zu der Förderrichtung (F) ausgerichtet sind; und/oder
insbesondere wobei der Anschlussabschnitt (31) von dem Versorgungsabschnitt (33) abzweigt und insbesondere senkrecht zu der Förderrichtung (F) ausgerichtet ist.

6. Stapelvorrichtung (11) nach Anspruch 4 oder 5,
wobei die Mündungen (21, 23) in einem Randabschnitt der Auflagefläche (15) näher aneinander angeordnet sind als in einem Mittenabschnitt der Auflagefläche (15).

7. Stapelvorrichtung (11) nach einem der vorhergehenden Ansprüche,
wobei die Produktauflage (51, 53) an einer Außenseite (55, 57) mit einer drehbaren Welle (41) verbunden ist, wobei die Produktauflage (51, 53) durch Drehen der Welle (41), insbesondere um 90 Grad, von der Zuführstellung (Z) in die Ablegestellung (A) verschwenkbar ist, insbesondere wobei die Welle (41) über eine Reibkupplung mit einem Motor (59) zum Antreiben der Welle (41) verbunden ist.

8. Stapelvorrichtung (11) nach Anspruch 7,
wobei in der drehbaren Welle (41) zumindest eine Pneumatikleitung ausgebildet ist, über welche der zumindest eine Pneumatikkanal (17, 19) mit der Einrichtung (65) zum Erzeugen eines Druckunterschieds verbindbar ist.

9. Stapelvorrichtung (11) nach einem der vorhergehenden Ansprüche,
wobei in der Produktauflage (51, 53) zumindest ein erster Pneumatikkanal (17) ausgebildet ist, welcher mit einer Drucklufteinrichtung (65) zum Erzeugen von Druckluft verbindbar ist und welcher zumindest eine Druckluftmündung (21) in die Auflagefläche (15) aufweist,
und wobei in der Produktauflage (51, 53) zumindest ein zweiter Pneumatikkanal (19) ausgebildet ist, welcher mit einer Vakuumeinrichtung (65) zum Erzeugen eines Vakuums verbindbar ist und welcher zumindest eine Vakuummündung (23) in die Auflagefläche (15) aufweist, insbesondere wobei die zumindest eine Druckluftmündung (21) geneigt zu der Auflagefläche (15) ausgerichtet ist und wobei die zumindest eine Vakuummündung (23) senkrecht zu der Auflagefläche (15) ausgerichtet ist.

10. Stapelvorrichtung (11) nach einem der vorhergehenden Ansprüche,
wobei die Stapelvorrichtung (11) eine Steuereinrichtung (43) zum Steuern der Einrichtung (65) zum Erzeugen eines Druckunterschieds umfasst,
wobei die Steuereinrichtung (43) insbesondere dazu ausgebildet ist, die Einrichtung (65) zum Erzeugen eines Druckunterschieds während des Förderns der Teilportion (63) auf die Produktauflage (51, 53) zunächst zum Beaufschlagen des zumindest einen Pneumatikkanals (17, 19) mit Druckluft und darauffolgend zum Ansaugen von Luft durch den zumindest einen Pneumatikkanal (17, 19) anzusteuern; und/oder
wobei die Stapelvorrichtung (11) insbesondere eine Messeinrichtung (45) zum Erfassen der auf der Produktauflage (51, 53) geförderten Teilportion (63) aufweist, wobei die Steuereinrichtung (43) dazu ausgebildet ist, die Einrichtung (65) zum Erzeugen eines Luftstroms in Abhängigkeit von einem Signal der Messeinrichtung (45) anzusteuern.

11. Stapelvorrichtung (11) nach einem der vorhergehenden Ansprüche,
wobei die Stapelvorrichtung (11) zumindest eine erste Produktauflage (51) und eine zweite Produktauflage (53) umfasst, welche in der Zuführstellung (Z) parallel zueinander ausgerichtet sind und gemeinsam die Auflagefläche (15) bilden,
wobei die erste Produktauflage (51) und die zweite Produktauflage (51) an einander entgegengesetzten Außenseiten (55, 57) mit einer jeweiligen Welle (41) verbunden sind, und wobei die erste Produktauflage (51) und die zweite Produktauflage (53) durch gegensinniges Drehen der Wellen (41) aus der Zuführstellung (Z) in die Ablegestellung (A) verschwenkbar sind, insbesondere wobei an jeder der Wellen (41) mehrere Produktauflagen (51, 53) in einem konstanten Abstand zueinander angeordnet sind.

12. Stapelvorrichtung (11) nach einem der vorhergehenden Ansprüche,
wobei die Einrichtung (65) zum Erzeugen eines Druckunterschieds zumindest eine entfernt von der Produktauflage (51, 53) gelegene Einrichtung zum Erzeugen von Druckluft und wenigstens einen im Bereich oder unmittelbar an der Produktauflage (51, 53) gelegenen, bevorzugt an der Produktauflage (51, 53) befestigten, Vakuum-Erzeuger (81) umfasst, der an die Einrichtung zum Erzeugen von Druckluft angeschlossen, mit dem in der Produktauflage (51, 53) ausgebildeten Pneumatikkanal (17) verbunden und dazu ausgebildet ist, mittels zugeführter Druckluft einen Unterdruck zu erzeugen, insbesondere wobei der Vakuum-Erzeuger (81) zumindest eine Venturi-Düse umfasst.

13. Produktauflage (51) für eine Stapelvorrichtung (11) zum Erstellen einer Lebensmittelportion (67), insbesondere nach einem der vorhergehenden Ansprüche,
mit zumindest einem in der Produktauflage (51) ausgebildeten Pneumatikkanal (17, 19), welcher mit einer Einrichtung (65) zum Erzeugen eines Druckunterschieds verbindbar ist und welcher zumindest eine Mündung (21, 23) in eine Auflagefläche (15) der Produktauflage (51) aufweist, wobei die Produktauflage (51) insbesondere durch ein 3D-Druck Verfahren hergestellt ist.

14. Verfahren zum Erstellen einer Lebensmittelportion (67) mittels einer Stapelvorrichtung (11), insbesondere einer Stapelvorrichtung (11) nach einem der Ansprüche 1 bis 12,
bei dem eine Teilportion (63) entlang einer Förderrichtung (F) zu der Stapelvorrichtung (11) transportiert und auf eine Produktauflage (51, 53) der Stapelvorrichtung (11) gefördert wird, wobei beim Fördern der Teilportion (63) durch einen in der Produktauflage (51, 53) ausgebildeten Pneumatikkanal (17, 19) ein entlang einer Auflagefläche (15) der Produktauflage (51, 53) gerichteter Luftstrom erzeugt und/oder Luft durch den Pneumatikkanal (17, 19) eingesaugt wird, und wobei die auf die Produktauflage (51, 53) geförderte Teilportion (63) durch Wegbewegen der Produktauflage (51, 53) unterhalb der Produktauflage (51, 53) abgelegt wird.

15. Verfahren nach Anspruch 14,
wobei zum Fördern der Teilportion (63) zunächst ein Druckluftstrom entlang der Auflagefläche (15) erzeugt wird und daraufhin Luft an der Auflagefläche (15) eingesaugt wird; und/oder wobei eine Stärke des Druckluftstroms und/oder des Einsaugens während des Förderns der Teilportion (63) konstant ist oder zeitlich und/oder räumlich variiert wird; und/oder wobei die Stärke des Druckluftstroms und/oder des Einsaugens zeitlich und/oder räumlich in Abhängigkeit von einer Eigenschaft der Teilportion (63), insbesondere einem Gewicht der Teilportion (63), eingestellt und/oder variiert wird; und/oder
wobei das Einsaugen unterbleibt, wenn eine fehlerhafte, insbesondere untergewichtige, Teilportion (63) an die Stapelvorrichtung (11) transportiert wird und/oder wobei vor dem Ablegen der fehlerhaften Teilportion (63) ein Ausschleusmittel unter der Produktauflage (51, 53) positioniert wird.
